(19) Europäisches Patentamt
European Patent Office
Office européen des brevets

(11) **EP 1 171 968 B1**

(12) **EUROPEAN PATENT SPECIFICATION**

(45) Date of publication and mention
of the grant of the patent:
**20.11.2002 Bulletin 2002/47**

(51) Int Cl.$^7$: **H04B 10/18**, H04B 10/135

(21) Application number: **00917014.3**

(22) Date of filing: **30.03.2000**

(86) International application number:
**PCT/EP00/02801**

(87) International publication number:
**WO 00/060776 (12.10.2000 Gazette 2000/41)**

(54) **DEVICE AND METHOD FOR COMPENSATING POLARIZATION MODE DISPERSION IN AN OPTICAL COMMUNICATION SYSTEM**

VORRICHTUNG UND VERFAHREN ZUR KOMPENSATION VON POLARISATIONSMODENDISPERSION IN EINEM OPTISCHEN ÜBERTRAGUNGSSYSTEM

DISPOSITIF ET PROCEDE DE COMPENSATION DE DISPERSION DE POLARISATION DE MODE DANS UN SYSTEME DE COMMUNICATION OPTIQUE

(84) Designated Contracting States:
**DE FR GB IT**

(30) Priority: **01.04.1999 EP 99830188**
**19.04.1999 US 129881 P**
**06.03.2000 EP 00104771**
**14.03.2000 US 189036 P**

(43) Date of publication of application:
**16.01.2002 Bulletin 2002/03**

(73) Proprietor: **Optical Technologies U.S.A. Corp.**
**Dover, DE 19901 (US)**

(72) Inventors:
• **ROMAGNOLI, Marco**
**I-20121 Milano (IT)**
• **MIDRIO, Michele**
**I-35100 Padova (IT)**
• **SCHIFFINI, Alessandro**
**I-10018 Pavone Canavese (IT)**
• **CORSINI, Raffaele**
**I-20136 Milano (IT)**

• **FRANCO, Pierluigi**
**I-35100 Padova (IT)**

(74) Representative: **Marchi, Massimo et al**
**c/o Marchi & Partners s.r.l.,**
**Via Pirelli, 19**
**20124 Milano (IT)**

(56) References cited:
**EP-A- 0 539 177**

• **SMITH N J ET AL: "GORDON-HAUS JITTER SUPPRESSION USING AN INTRA-SPAN PHASE MODULATOR AND POST TRANSMISSION DISPERSION COMPENSATOR" IEEE PHOTONICS TECHNOLOGY LETTERS, vol. 8, no. 3, 1 March 1996 (1996-03-01), pages 455-457, XP000582844 ISSN: 1041-1135**
• **YOICHI FUJII: "INFORMATION-MAINTAINING SEPARATION OF OPTICAL PULSES EMPLOYING NONLINEARITY OF SILICA FIBER" APPLIED OPTICS, vol. 29, no. 6, 20 February 1990 (1990-02-20), pages 864-869, XP000101341 ISSN: 0003-6935**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a optical communication system in which the polarization mode dispersion (PMD) and/or the chromatic dispersion is compensated, a method for compensating this PMD and/or this chromatic dispersion and a modulation and dispersion device usable in this system and for this method.

At the present time, in the field of optical fibre telecommunications of the digital type, the principal methods used for transmitting optical bits are the method usually called "Non-Return-to-Zero", or NRZ, and the method usually called "Return-to-Zero", or RZ.

The first method (NRZ) consists in transmitting a logical "1" or a logical "0" value throughout the whole time slot corresponding to the chosen bit rate. For example, when the optical signals are amplitude modulated by a modulation of an on/off type, the bit 1 corresponds to the presence of an optical signal having a predetermined intensity throughout the time slot, and the bit 0 corresponds to the virtual absence of an optical signal throughout the time slot.

The second method (RZ), on the other hand, uses a pulse-type transmission system by which a sequence of pulses, each having a duration which is shorter than the time slot, is transmitted, and these are then intensity modulated in accordance with the information to be transmitted. For example, therefore, with a modulation of the on/off type, the bit 1 corresponds to the presence of an optical pulse having a predetermined intensity and the bit 0 corresponds to the virtual absence of an optical signal.

In the case of a transmission of the "soliton" or "quasi-soliton" type, the pulses are the natural solution of the propagation equation in dispersive and non-linear media such as optical fibres and have a shape, amplitude and duration such that their propagation in an optical fibre is optimized. These pulses are thus propagated in a predetermined section of optical fibre with virtually no alterations due to chromatic dispersion and non-linear effects.

In both NRZ and RZ transmission, the characteristics of the optical bits which are propagated are altered as a result of the intrinsic birefringence of an optical fibre (mainly due to inaccuracies of fabrication which produce, for example, an imperfectly circular core geometry and/or internal asymmetries). This is because an optical signal is propagated along an optical fibre according to two fundamental polarization modes which are orthogonal with respect to each other and which, owing to the birefringence of the fibre, are propagated along the fibre at group velocities which are different from each other. In other words, the two modes undergo different time delays. This phenomenon, conventionally defined as the polarization mode dispersion (PMD), may cause a broadening of the optical bits in time (which in some cases may even result in their division into two separate bits) and a time deviation (loss of timing) of the bits with respect to the synchronization system (clock) of the transmission system.

This broadening in time and loss of timing of the optical bits during their propagation in an optical fibre limit the maximum transmission bit rate of an optical communication system and thus limit its performance.

Moreover, since the fundamental polarization modes and their time delays vary in time (owing to variations of the external temperature, displacements of the fibre and vibrations, for example), the effects of PMD also vary in time in a random way [C.D. Poole et al., "Polarization-dependent pulse compression and broadening due to polarization dispersion in dispersion-shifted fiber", Optics Letters, vol. 13, No. 2, pp. 155-157, 1988].

Finally, it is worth noting that the sections of optical line along which optical signals can pass without any opto-electronic regeneration are very long, owing to the connection of optical amplifiers in the said line. This, however, contributes to an increase in the accumulation of PMD along a transmission line and the consequent deterioration of the signal-to-noise ratio on reception.

In addition to this PMD, the optical bits also undergo alterations as a result of the well-known phenomenon of chromatic dispersion, which is also due to the intrinsic characteristics of optical fibres.

Various devices and/or methods have now been proposed to reduce these effects, and in particular the PMD, in an optical communication system.

US Patent 5 659 412 describes an apparatus and a method for compensating the PMD introduced into an optical signal which is propagated in an optical fibre. A received signal is divided into a first and a second polarization component by a polarization splitter. A control signal, which corresponds to the phase difference between the two polarization components, is used to control at least one polarization controller which is positioned in the optical path before the polarization splitter in such a way that the two polarization components are aligned with the principal polarization states of the received signal. The control signal may also be used to regulate a variable delay element in such a way that the phases of the two polarization components are aligned before they are combined to provide a PMD compensated output signal.

US Patent 5 473 457 describes a method and apparatus for compensating the PMD. An optical signal is frequency modulated and sent along an optical fibre. At the output of this optical fibre the signal is sent to a polarization controller and then to an optical fibre which maintains the polarization state of a signal. At the output of the latter fibre, a polarization splitter separates the two orthogonal polarization components of the signal which are detected to generate an electrical control signal for the said polarization controller. The polarization controller is thus controlled continuously in such a way as to compensate the PMD.

US Patent 5 311 346 describes an apparatus and a method for reducing the PMD in an optical transmission system by aligning the polarization state of a received optical signal with that of the transmitted optical signal. A polarization controller is positioned either at the input or at the output of a long-distance optical fibre system to align the polarization of the received optical signal with that of the transmitted optical signal, and thus to minimize the distortion of the received signal. The polarization controller can be controlled automatically by measuring the distortion of the received signal and can thus generate a control signal for the polarization controller.

US Patent 5 587 827 describes a device for compensating the chromatic dispersion, the polarization dispersion and the frequency "chirp" of a transmitter. This device combines a wavelength-polarization transformer and a polarization-delay converter having dispersion characteristics which are virtually equivalent in magnitude and of opposite sign to the quantity of dispersion and frequency chirp which is to be compensated.

US Patent 5 491 576 describes an apparatus for reducing the deterioration of the signal-to-noise ratio (SNR) due to a certain number of effects which depend on the polarization of a signal and are caused by the optical fibres and other components (e.g. repeaters, amplifiers) present in an optical transmission system. These effects are, for example, the polarization mode dispersion (PMD), the polarization dependent loss (PDL), and the polarization dependent hole-burning (PDHB). The problem of the deterioration of the SNR is tackled by transmitting an optical signal having two components at different wavelengths from each other and dynamically controlling the wavelength and the absolute and relative polarization state of the two components and the relative delay between the data carried by the two components, in such a way as to continuously optimize the polarization state of the two components in accordance with the PDL, PMD, PDHB and the non-linearities of the transmitting optical fibre.

All these known devices and/or methods have the disadvantage of requiring a decision and feedback circuit. They do not, therefore, carry out a reduction of the PMD in real time.

US Patent 5 596 448 describes a device for compensating the chromatic dispersion without affecting the polarization dispersion. The device comprises a dispersion compensation fibre and a polarization conversion mirror. The dispersion compensation fibre has a chromatic dispersion of opposite sign to that of the optical fibre transmission line and its length is chosen in such a way as to match the chromatic dispersion value of the optical fibre transmission line. The light propagated in the transmission line is then propagated in the dispersion compensation fibre from one end to the other, towards the polarization conversion mirror. This mirror converts the polarization state of the light into a state orthogonal and inverted in time with respect to the polarization state of the light incident on it, and retransmits the light in the dispersion compensation fibre in the direction opposite that of the incident light. This enables the chromatic dispersion to be compensated. The PMD is also compensated, in the sense that the optical signal at the output of the said dispersion compensation fibre has the same PMD as the signal at its input. In other words, US Patent 5 596 448 does not tackle the problem of compensating the PMD of the optical fibre transmission line, but only that of the short section of dispersion compensation fibre.

Furthermore, all the aforesaid devices and/or methods also have the disadvantage that they only act on one of the two principal phenomena associated with PMD (broadening of the bits in time and their loss of timing with respect to the clock of the transmission system), namely that of the broadening of the bits in time.

Finally, N.J. Smith et al. ("Soliton dynamics in the presence of phase modulators", Optics communications, vol. 102, No. 3,4, pp. 324-328, October 1993) have presented a theoretical and mathematical study which assumes an optical communication system with soliton transmission in which the output of each optical amplifier is connected to a device comprising a band-pass filter and a phase modulator which are capable of controlling the development, of an effect known as "Gordon-Haus jitter" (J.P. Gordon and H.A. Haus, "Random walk of coherently amplified solitons in optical fiber transmission", Optics Letters, vol. 11, No. 10, pp. 665-667, October 1986).

However, this system does not tackle or resolve the problem of PMD.

EP 0 539 177 discloses an optical transmission system that can perform amplification and dispersion pre-equalization. The system includes a phase modulator that phase-modulates the input optical signal. The phase modulator is driven by a signal corresponding to the envelope of the input optical signal. The phase modulated optical signal is further transmitted through a dispersive optical fiber transmission path. A further dispersion pre-equalization repeater can be coupled along the trunk fiber line.

The present invention is intended to act in real time on both the phenomena associated with PMD (broadening of the bits in time and their loss of timing with respect to the clock of the transmission system).

For this purpose, the present invention relates, in a first aspect, to an optical communication system comprising:

- a first apparatus for transmitting at least one digital optical signal comprising a flow of bits having a predetermined bit rate $f_c$ and a predetermined time slot with a duration $1/f_c$;
- an optical transmission line, optically connected to the said first apparatus, for the propagation of the said digital optical signal;
- a second apparatus, optically connected to the said optical transmission line, to receive the said digital optical signal, the said second apparatus comprising a receiving device and a modulation and dispersion device, the said modulation and dispersion device comprising:

i. a modulation element for modulating the phase of the said digital optical signal by a modulation having

a) a modulation frequency predetermined in accordance with the said bit rate $f_c$ of the said digital optical signal,
b) a periodic variation in time which is approximately symmetrical with respect to a predetermined point within the said time slot whose duration is $1/f_c$, and
c) a maximum amplitude K of the said periodic variation;

ii. a chromatic dispersion element, optically connected to the said modulation element, and capable of introducing a group delay D into each bit of the digital optical signal phase modulated as above, the said chromatic dispersion element providing a dispersion of the anomalous type, when the said periodic variation in time has a positive modulation amplitude, and a dispersion of the normal type when the said periodic variation in time has a negative modulation amplitude.

Preferably, the product of the said maximum amplitude K and the said group delay D is in the range from A to B, where A is equal to $-0.5*(1-X)$ and B is equal to $-0.5*(1+Y)$, and X is less than or equal to 0.2 and Y is less than or equal to 2.

The optical communication system according to the invention has the advantage of compensating the PMD introduced into a digital optical signal by an optical transmission line.

Moreover, it not only compensates the phenomenon of loss of timing of the bits associated with PMD, but also compensates other random phenomena of loss of timing (jitter), which typically occur at high frequency, such as the Gordon-Haus jitter typical of optical transmission systems of the soliton or quasi-soliton type.

The optical communication system according to the invention also has the further advantage of compensating the chromatic dispersion.

Advantageously, the said X is less than or equal to 0.1. Even more advantageously, it is virtually equal to zero. Preferably, the said Y is less than or equal to 1.5. More preferably, the said Y is less than or equal to 1. Even more preferably, it is less than or equal to 0.5. Advantageously, it is virtually equal to zero.

In one embodiment, the said bits are in RZ format.

In this case, the absolute value of the said maximum amplitude K is preferably virtually equal to $1/2T^2$, and the absolute value of the said group delay D is preferably virtually equal to $T^2$, where T is the duration in time of the optical pulses used for transmission of the RZ type.

Additionally, in the case of RZ transmission, the said first apparatus comprises a generator of a train of optical pulses and a modulator of the said train of optical pulses.

The said generator of a train of optical pulses typically comprises an optical source and a first amplitude modulator. The said optical source is capable of emitting a continuous optical signal having a predetermined intensity, while the said first amplitude modulator modulates the intensity of the said continuous optical signal in such a way as to supply a train of optical pulses having the said predetermined bit rate $f_c$ and the said predetermined time slot with the duration $1/f_c$. In an alternative embodiment, the said generator of a train of optical pulses consists of a laser of the "mode-locked" type.

The said modulator of the said train of optical pulses comprises a second amplitude modulator capable of intensity modulating, at the said bit rate $f_c$, the said optical pulses according to a predetermined digital data element to be transmitted, in such a way as to supply the said digital optical signal comprising a flow of bits in RZ format.

In another embodiment, the said bits are in NRZ format.

In this case, the said first apparatus comprises an optical source capable of emitting a continuous optical signal having a predetermined intensity and an amplitude modulator capable of modulating, at the said bit rate $f_c$, the intensity of the said continuous optical signal according to a predetermined digital data element to be transmitted, in such a way as to supply the said digital optical signal comprising a flow of bits in NRZ format. In one variant, the said optical source is modulated directly by an electrical signal carrying the said predetermined digital data element to be transmitted.

Typically, the said optical transmission line comprises at least one optical fibre, preferably inserted in an optical cable. If required by the path of the said optical transmission line, the said optical transmission line also comprises at least one optical amplifier.

Preferably, the said second apparatus also comprises an optical beam splitter capable of dividing the intensity of the said digital optical signal in such a way as to supply a first fraction of intensity to the said modulation and dispersion device and a second fraction of intensity to a clock recovery.

Advantageously, the said clock recovery is actively connected to the said modulation element of the said modulation and dispersion device, and is capable of determining the bit rate $f_c$ of the said digital optical signal arriving from the said optical beam splitter and the synchronization with the average central position of the time slot of the bits of the said digital optical signal.

In one embodiment, the said modulation frequency is virtually equal to the said bit rate $f_c$ determined by the said clock recovery.

Advantageously, the said predetermined point within the said time slot corresponds to the said average central position of the time slot determined by the said clock recovery.

Preferably, the said periodic variation in time of the said phase modulation is virtually sinusoidal. More preferably, the said periodic variation in time of the said phase modulation is of the truncated cosine type (approximately parabolic).

In one embodiment of the said modulation and dispersion device, the said modulation element comprises at least a first phase modulator and a driver device for the said phase modulator, the said driver device being actively connected to the said clock recovery.

Preferably, the said modulation element also comprises an optical circulator and a device capable of reflecting the said digital optical signal and of rotating its polarization state through approximately 90°.

More preferably, the said modulation element also comprises a second phase modulator having its birefringence axes rotated through 90° with respect to the first phase modulator.

Advantageously, the said modulation element also comprises a second phase modulator, a first polarization beam splitter and a second polarization beam splitter.

The said chromatic dispersion element typically consists of a suitable section of optical fibre. Alternatively, it consists of a conventional optical circulator and a suitable variable-period ("chirped") optical fibre Bragg grating, for example one of the type used for compensation of the chromatic dispersion. An example of such a variable-period grating is described by K.O. Hill et al. ("Chirped in fiber Bragg gratings for compensation of optical fiber dispersion", Optics Letters, vol. 19, No. 17, pp. 1314-1316, 1994). A method of making such a variable-period Bragg grating is also described in Patent Publication WO 98/08120.

Finally, in another embodiment, the said chromatic dispersion element consists of a suitable pair of diffraction gratings.

Typically, the said group delay D introduced by the said chromatic dispersion element is equal to the product $\beta_2 * L$, where $\beta_2$ is the chromatic dispersion, expressed in $ps^2/km$, of the chromatic dispersion element and L is its length, expressed in km.

Typically, the said receiving device comprises a photodetector.

In a second aspect, the present invention relates to a device for processing an optical signal, the said device comprising

- a modulation element for modulating the phase of the said optical signal by a modulation having

  a) a predetermined modulation frequency,
  b) a predetermined periodic variation in time, and
  c) a maximum amplitude K of the said periodic variation;

- a chromatic dispersion element, connected optically to the said modulation element, and capable of introducing a group delay D into the said optical signal,

  i. the product of the said maximum amplitude K and the said group delay D being in the range from A to B, where A is equal to -0.5*(1-X) and B is equal to -0.5*(1+Y), and X is less than or equal to 0.2 and Y is less than or equal to 2;
  ii. the said chromatic dispersion element providing a dispersion of the anomalous type, when the said periodic variation in time has a positive modulation amplitude, and a dispersion of the normal type when the said periodic variation in time has a negative modulation amplitude.

Typically, the said optical signal is a digital optical signal comprising a flow of bits having a predetermined bit rate $f_c$ and a predetermined time slot with a duration $1/f_c$

In this case, the said modulation frequency is preferably predetermined in accordance with the said bit rate $f_c$ of the said digital optical signal. Even more preferably, the said periodic variation in time is approximately symmetrical with respect to a predetermined point within the said time slot whose duration is $1/f_c$.

The structural characteristics of the said modulation and dispersion device have already been described in detail in relation to the modulation and dispersion device of the optical communication system according to the invention. For details of these, reference should therefore be made to the preceding text.

In the aforesaid optical communication system, this modulation and dispersion device according to the invention not only compensates in real time both of the phenomena caused by PMD (broadening in time and loss of timing of the optical bits), but also compensates the chromatic dispersion. It also has the advantage of being simpler to produce and less expensive than the known apparatus, and of being more reliable and requiring less maintenance.

The inventors have realized that the advantageous properties of the modulation and dispersion device according to the present invention arise from the suitable compression and/or retiming of the bits.

Consequently, although the modulation and dispersion device according to the invention has been described above in combination with an optical communication system in which the function of compensating the PMD and/or the chromatic dispersion is carried out, a person with average skill in the art will understand that it can easily be used in other applications for compressing and/or retiming the optical bits.

In a third aspect, the present invention also relates to a method for processing the bits of a digital optical signal comprising a flow of bits having a predetermined bit rate $f_c$ and a predetermined time slot having a duration $1/f_c$, the said method comprising the steps of

a) modulating the phase of the said digital optical signal by a modulation having

- a modulation frequency predetermined in accordance with the said bit rate $f_c$ of the said digital optical signal,
- a periodic variation in time which is approximately symmetrical with respect to a predetermined point within the said time slot having the duration $1/f_c$, and
- a maximum amplitude K of the said periodic variation;

b) causing, in a suitable chromatic dispersion element, a group delay D of each bit of the said phase modulated digital optical signal, the said chromatic dispersion element providing a dispersion of the anomalous type, when the said periodic variation in time has a positive modulation amplitude, and a dispersion of the normal type when the said periodic variation in time has a negative modulation amplitude.

In a first embodiment, the said processing consists, in the compression of the bits, of the said digital optical signal.

In a second embodiment, the said processing consists, in the retiming of the bits, of the said digital optical signal.

In a third embodiment, the said processing consists, in the compression and retiming, of the bits of the said digital optical signal.

For the purpose of the present description and claims, the expression "compression of a bit" is used to denote a concentration of the power associated with the said bit towards the center of the time slot.

Typically, the said group delay D is equal to the product $\beta_2 \cdot L$, where $\beta_2$ is the chromatic dispersion, expressed in $ps^2/km$, of the said chromatic dispersion element, and L is its length, expressed in km.

Advantageously, the product of the said maximum amplitude K and the said group delay D is in the range from A to B, where A is equal to -0.5*(1-X) and B is equal to -0.5*(1+Y), and X is less than or equal to 0.2 and Y is less than or equal to 2.

For the characteristics of the said X and Y, reference should be made to the above description of the optical communication system according to the invention.

Typically, the step a) also comprises the step a1) of determining the bit rate $f_c$ of the said digital optical signal.

In one embodiment, the said modulation frequency is virtually equal to the said bit rate $f_c$ determined in the step a1).

Advantageously, the step a) also comprises the step a2) of determining the average central position of the time slot of the bits of the said digital optical signal and the synchronization with the said average central position.

Preferably, the said predetermined point within the said time slot corresponds to the said average central position determined in step a2).

Advantageously, the said periodic variation in time of the said phase modulation is approximately sinusoidal. More preferably, it is of the truncated cosine type (approximately parabolic).

Additionally, for details of the characteristics of the said chromatic dispersion element, reference should be made to the text above.

In a fourth aspect, the present invention also relates to an optical communication system comprising:

- a first apparatus for transmitting at least one digital optical signal comprising a flow of bits having a predetermined bit rate $f_c$ and a predetermined time slot with a duration $1/f_c$;
- an optical transmission line, optically connected to the said first apparatus, for the propagation of the said digital optical signal;
- a second apparatus, optically connected to the said optical transmission line, to receive the said digital optical signal, the said second apparatus comprising a receiving device and a modulation and dispersion device, the said modulation and dispersion device comprising:

i. a modulation element for modulating the amplitude of the said optical signal by a modulation having

a1) a modulation frequency predetermined in accordance with the said bit rate $f_c$ of the said digital optical signal,
b1) an amplitude periodic variation in time which is approximately symmetrical with respect to a predetermined point within the said time slot whose duration is $1/f_c$, and
c1) a maximum amplitude $\alpha_{AM}$ of the said amplitude periodic variation;

ii. a modulation element for modulating the phase of the said digital optical signal by a modulation having

a2) a modulation frequency predetermined in accordance with the said bit rate $f_c$ of the said digital optical signal,

b2) a phase periodic variation in time which is approximately symmetrical with respect to a predetermined point within the said time slot whose duration is $1/f_c$, and

c2) a maximum amplitude K of the said phase periodic variation;

iii. a chromatic dispersion element, optically connected to the said modulation elements, and capable of introducing a group delay D into each bit of the modulated digital optical signal, the said chromatic dispersion element providing a dispersion of the anomalous type, when the said phase periodic variation in time has a positive modulation amplitude, and a dispersion of the normal type when the said phase periodic variation in time has a negative modulation amplitude.

Preferably, the product of the said maximum amplitude K and the said group delay D is in the range from A to B, where A is equal to -0.5*(1-X) and B is equal to -0.5*(1+Y), and X is less than or equal to 0.2 and Y is less than or equal to 2.

The optical communication system according to this fourth aspect of the invention has the further advantage of compensating the PMD introduced into a digital optical signal by an optical transmission line substantially independently from the actual amount of PMD. This is particularly advantageous whenever the amount of PMD is expected to change over time, e.g., due to aging of the optical fiber line.

Advantageously, synchronous amplitude modulation as provided according to the fourth aspect of the invention attenuates the portion of the optical signal that has drifted or spread from the center of the time slot, while transmitting substantially without attenuation the portion of the signal corresponding to the center of the time slot. This provides a signal shaping that, in combination with synchronous phase modulation and dispersion, further reduces the effects of time broadening and loss of timing.

The optical communication system according to the invention also has the further advantage of compensating the chromatic dispersion.

Advantageously, the said X is less than or equal to 0.1. Even more advantageously, it is virtually equal to zero. Preferably, the said Y is less than or equal to 1.5. More preferably, the said Y is less than or equal to 1. Even more preferably, it is less than or equal to 0.5. Advantageously, it is virtually equal to zero.

In one embodiment, the said bits are in RZ format.

In another embodiment, the said bits are in NRZ format.

In a fifth aspect, the present invention also relates to a modulation and dispersion device for processing an optical signal, the said modulation and dispersion device comprising

- a modulation element for modulating the amplitude of the said optical signal by a modulation having

a) a predetermined modulation frequency,
b) a predetermined amplitude periodic variation in time, and
c) a maximum amplitude $\alpha_{AM}$ of the said amplitude periodic variation;

- a modulation element for modulating the phase of the said optical signal by a modulation having

a) said predetermined modulation frequency,
b) a predetermined phase periodic variation in time, and
c) a maximum amplitude K of the said phase periodic variation;

- a chromatic dispersion element, connected optically to the said modulation elements, and capable of introducing a group delay D into the said modulated optical signal,

i. the product of the said maximum amplitude K and the said group delay D being in the range from A to B, where A is equal to -0.5*(1-X) and B is equal to -0.5*(1+Y), and X is less than or equal to 0.2 and Y is less than or equal to 2; and
ii. the said chromatic dispersion element providing a dispersion of the anomalous type, when the said phase periodic variation in time has a positive modulation amplitude, and a dispersion of the normal type when the said phase periodic variation in time has a negative modulation amplitude.

Preferred characteristics of the second aspect of the invention are also preferred characteristics of the fifth aspect of the invention.

Advantageously, said maximum amplitude of said amplitude periodic variation has a value greater than 80%. Preferably, said maximum amplitude of said amplitude periodic variation has a value greater than 90%. Even more preferably, said maximum amplitude of said amplitude periodic variation has a value of substantially 100%.

In a sixth aspect, the present invention also relates to a method for processing the bits of a digital optical signal comprising a flow of bits having a predetermined bit rate $f_c$ and a predetermined time slot having a duration $1/f_c$, the said method comprising the steps of

a) modulating the amplitude of the said digital optical signal by a modulation having

a1) a modulation frequency predetermined in accordance with the said bit rate $f_c$ of the said digital optical signal,
a2) an amplitude periodic variation in time which is approximately symmetrical with respect to a predetermined point within the said time slot having the duration $1/f_c$, and
a3) a maximum amplitude $\alpha_M$ of the said amplitude periodic variation;

b) modulating the phase of the said digital optical signal by a modulation having

b1) a modulation frequency predetermined in accordance with the said bit rate $f_c$ of the said digital optical signal,
b2) a phase periodic variation in time which is approximately symmetrical with respect to a predetermined point within the said time slot having the duration $1/f_c$, and
b3) a maximum amplitude K of the said phase periodic variation;

c) causing, in a suitable chromatic dispersion element, a group delay D of each bit of the said modulated digital optical signal, the said chromatic dispersion element providing a dispersion of the anomalous type, when the said phase periodic variation in time has a positive modulation amplitude, and a dispersion of the normal type when the said phase periodic variation in time has a negative modulation amplitude.

Characteristics and advantages of the invention will now be illustrated with reference to embodiments represented by way of example and without restriction in the attached figures, in which:

- Fig. 1 is a schematic representation of a first embodiment (Fig. 1a) and a second embodiment (Fig. 1b) of an optical transmission system according to the invention;
- Fig. 2 is a schematic representation of a first embodiment of a modulation and dispersion device according to the invention;
- Fig. 3 is a schematic representation of a second embodiment of a modulation and dispersion device according to the invention;
- Fig. 4 is a schematic representation of a third embodiment of a modulation and dispersion device according to the invention;
- Fig. 5 shows the values of the probability density as a function of the closure of the eye diagram which were found by a simulation of the comparison optical communication system without a modulation and dispersion device according to the invention (Fig. 5a) and of a system according to the invention with a modulation and dispersion device according to the invention for compensation of the PMD in the two cases of phase modulation of the sinusoidal type (Fig. 5b) and of the truncated cosine type (Fig. 5c);
- Fig. 6 shows the values of the probability density as a function of the closure of the eye diagram which were found by a simulation of the comparison optical communication system without a modulation and dispersion device according to the invention (Fig. 6a) and of a system according to the invention with a modulation and dispersion device according to the invention, in the two cases of phase modulation of the sinusoidal type (Fig. 6b) and of the truncated cosine type (Fig. 6c), in which the presence of an electrical filter in the receiver was simulated;
- Fig. 7 shows a first experimental set-up used to verify the behaviour of a modulation and dispersion device according to the invention for compensation of the PMD;
- Fig. 8 shows the results obtained with the experimental set-up in Fig. 7;
- Fig. 9a and Fig. 9b show a second experimental set-up used to verify the performance of a system according to the invention, comprising a modulation and dispersion device according to the invention for compensation of the PMD;
- Fig. 10 shows the results obtained with the experimental set-up in Fig. 9 in the case of a digital optical signal in RZ format (Fig. 10a) and a signal in NRZ format (Fig. 10b);
- Fig. 11 shows a diagram of the level curves for penalty values of 0.5 dB (curve A), 1 dB (curve B), 2 dB (curve C) and 3 dB (curve D) which were obtained by a simulation of a comparison optical communication system, without a modulation and compensation device according to the invention for compensating the chromatic dispersion, for the case of a digital optical signal in NRZ format;
- Fig. 12 shows a diagram of the level curves for penalty values of 0.5 dB (curve A), 1 dB (curve B), 2 dB (curve C) and 3 dB (curve D) which were obtained by a simulation of an optical communication system according to the invention, with a modulation and compensation device according to the invention for compensating the chromatic dispersion, in the case of a digital optical signal in NRZ format;
- Fig. 13 shows the eye diagram obtained by simulations of a comparison system (Fig. 13a) and a system according to the invention (Fig. 13b) which were carried out on the assumption of an average compensation rate of 90%, a post-compensation of -600 ps and a digital optical signal in NRZ format;
- Fig. 14 shows a diagram of the level curves for penalty values of 0.5 dB (curve A), 1 dB (curve B), 2 dB (curve C) and 3 dB (curve D) which were obtained by a simulation of an optical communication system according to the invention, with a modulation and compensation device according to the invention for compensating the chromatic dispersion, in the case of a digital optical signal in NRZ format, with a variation of the depth of modulation $\alpha_M$ used in the modulation and dispersion device according to the invention;

- Fig. 15 shows a diagram of the level curves for penalty values of 0.5 dB (curve A), 1 dB (curve B), 2 dB (curve C) and 3 dB (curve D) which were obtained by a simulation of a comparison optical communication system, without a modulation and compensation device according to the invention for compensating the chromatic dispersion, in the case of a digital optical signal in RZ format;

- Fig. 16 shows a diagram of the level curves for penalty values of 0.5 dB (curve A), 1 dB (curve B), 2 dB (curve C) and 3 dB (curve D) which were obtained by a simulation of an optical communication system according to the invention, with a modulation and compensation device according to the invention for compensating the chromatic dispersion, in the case of a digital optical signal in RZ format;

- Fig. 17 shows the eye diagram obtained by simulations of a comparison system (Fig. 13a) and a system according to the invention (Fig. 13b) which were carried out on the assumption of an average compensation rate of 78%, a post-compensation of 0 ps and a digital optical signal in RZ format;

- Fig. 18 shows a diagram of the level curves for penalty values of 0.5 dB (curve A), 1 dB (curve B), 2 dB (curve C) and 3 dB (curve D) which were obtained by a simulation of an optical communication system according to the invention, with a modulation and compensation device according to the invention for compensating the chromatic dispersion, in the case of a digital optical signal in RZ format, with a variation of the depth of modulation $\alpha_M$ used in the modulation and dispersion device according to the invention;

- Fig. 19 schematic representation of a further embodiment of a modulation and dispersion device according to the invention;

- Fig. 20a and Fig. 20b show a further experimental set-up used to verify the performance of a system according to the invention, comprising a modulation and dispersion device according to the invention;

- Fig. 21 shows a diagram of the values of BER which were obtained with a variation of the signal-to-noise ratio OSNR in the experiment shown in Fig. 20a and Fig. 20b;

- Fig. 22 shows the Q-factor versus the Differential Group Delay (DGD) for a simulation of the system according to the invention adopting a modulation and dispersion device according to the embodiment of Fig. 19;

- Fig. 23 shows a graph of BER versus Differential Group Delay (DGD) for a simulation of the system according to the invention adopting a modulation and dispersion device according to the embodiment of Fig. 19.

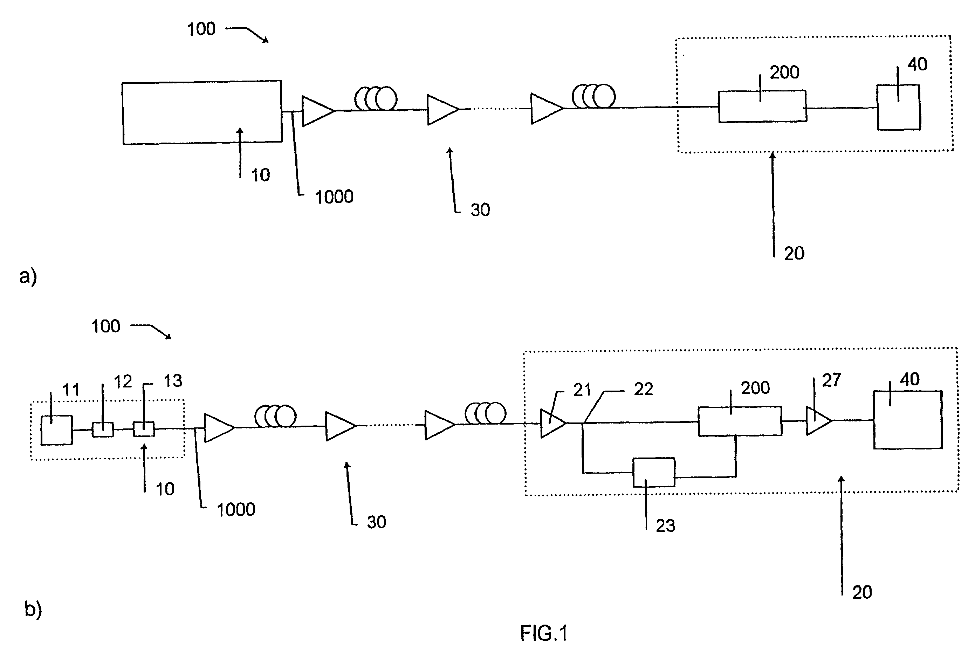

Each of the embodiments shown in Figures 1a and 1b of an optical communication system 100 according to a first aspect of the invention comprises a first apparatus 10 for supplying a digital optical signal 1000, an optical transmission line 30 and a second apparatus 20 for receiving the said digital optical signal 1000, the said second apparatus 20 comprising a modulation and dispersion device 200 according to a second aspect of the invention.

In the embodiment in Fig. 1b, the said first apparatus 10 is a conventional apparatus capable of supplying a digital optical signal 1000 in RZ format. More particularly, it comprises a generator of a train of optical pulses and a modulator of the said train of optical pulses. The said generator of a train of optical pulses consists of a laser source 11 and a first amplitude modulator 12, while the said modulator of the said train of optical pulses consists of a second amplitude modulator 13.

The said suitable laser source 11 is capable of emitting a continuous optical signal at the typical wavelengths of optical fibre telecommunications, for example those in the range from approximately 1300 to 1700 nm, and preferably in the third transmission window of the optical fibres in the region of 1500-1600 nm.

The first amplitude modulator 12 is a conventional modulator, for example one of the Mach Zehnder interferometric type or of the electro-absorption type. It is driven by a suitable electrical signal (not shown) in such a way that the intensity of the said continuous optical signal leaving the said laser source 11 is modulated, and in such a way as to supply a train of optical pulses characterized by a predetermined duration T, a bit rate equal to the desired transmission speed and a predetermined time profile (shape). For example, the said bit rate is 2.4 Gbit/s, 10 Gbit/s or, preferably, 40 Gbit/s. Additionally, the shape of the said optical pulses is typically Gaussian or of the hyperbolic secant type.

For the purpose of the present invention, the expression "duration T" of an optical pulse is used to denote the time elapsing between the time at which the intensity of an optical pulse assumes a maximum value $I_{max}$ and the time at which the intensity of the said optical pulse assumes a value of $I_{max}/e$.

Typically, the said predetermined duration T is determined as a function of the total duration at half height $T_{FWHM}$ (conventionally known as the "Full Width Half Maximum") of the optical pulses. For example, when the said pulses have a Gaussian shape, the said predetermined duration T is equal to $T_{FWHM}/[2(\ln 2)^{1/2}]$, in other words approximately $T_{FWHM}/1.665$, and when the said pulses have a shape of the hyperbolic secant type it is equal to $T_{FWHM}/(2*\text{arccos } h\sqrt{2})$, in other words approximately $T_{FWHM}/1.763$.

In another embodiment (not shown), the said generator of a train of optical pulses consists of a single device such as, for example, a conventional "mode-locked" laser.

The said second amplitude modulator 13 is a conventional amplitude modulator, for example one of the Mach Zehnder interferometric type or of the electro-absorption type. It is driven by an electrical signal containing the digital information to be transmitted along the optical transmission line 30 in such a way as to modulate the said train of pulses, supplied by the said first device, at the desired bit rate $f_c$ and in accordance with the said digital information to be transmitted. Thus at the output of the said first apparatus 10 there is a digital optical signal 1000 comprising a train of pulses characterized by an RZ format, a bit rate $f_c$, a time slot having a duration $1/f_c$, a duration T and a shape which is, for example, Gaussian.

In an alternative embodiment (not shown), the said first apparatus 10 is a conventional apparatus capable of supplying a digital optical signal 1000 in NRZ format. In this case, it typically consists of a laser source and an amplitude modulator. The said laser source is capable of emitting a continuous optical signal at the typical wavelengths of optical fibre telecommunications, for example those in the range from approximately 1300 to 1700 nm, and preferably in the third transmission window of the optical fibres in the region of 1500-1600 nm. The said amplitude modulator is capable of modulating the intensity of the said continuous optical signal at the desired bit rate $f_c$, according to the digital information to be transmitted. Typically, the said amplitude modulator is a conventional amplitude modulator, for example one of the Mach Zehnder interferometric type or of the electro-absorption type, and is driven by an electrical signal containing the digital information to be transmitted along the optical transmission line 30.

In the last case, at the output of the said first apparatus 10 there is a digital optical signal 1000 comprising a flow of bits having an NRZ format, a bit rate $f_c$ and a time slot with a duration $1/f_c$.

The said digital optical signal 1000 is thus transmitted along the said optical transmission line 30 which is optically connected to the output of the said first apparatus 10.

The said optical transmission line 30 has, for example, a length of 500 km, and typically consists of an optical fibre. Preferably, the said optical fibre is single-mode at the transmission wavelength and is inserted in a suitable optical cable. For example, it may be a conventional optical fibre of the step index type, with a PMD of approximately 1 ps/km$^{1/2}$ and a chromatic dispersion ($\beta_2$) of approximately 20 ps$^2$/km.

Alternatively, it is possible to use other conventional types of optical fibre, such as a dispersion shifted (DS) fibre, having a zero nominal dispersion at 1550 nm, or a non zero dispersion (NZD) fibre.

The PMD values of the optical fibre of the said optical transmission line 30 may, for example, lie in the range from 0.05 to 1.5 ps/km$^{1/2}$.

When required by the path of the said optical transmission line 30, the said line 30 also comprises optical amplifiers in cascade, with one every 100 km, for example.

Preferably, the optical amplifiers are of the conventional type, for example those of the active fibre type doped with rare earths (e.g. erbium), or of the semiconductor type, which are capable of amplifying the wavelengths used for transmitting the digital optical signal 1000.

The said second apparatus 20 is connected optically to the transmission line 30 and is capable of receiving the digital optical signal 1000.

Typically, it comprises a conventional optical amplifier 21 for amplifying the digital optical signal 1000 arriving from the transmission line 30, an optical beam splitter 22, a clock recovery 23, a modulation and dispersion device 200 according to another aspect of the invention, an optical amplifier 27 if necessary, and conventional receiving device 40 for receiving the digital optical signal 1000.

The optical amplifier 21 is, for example, an amplifier of the active fibre type doped with rare earths, or of the semiconductor type, and is capable of raising the intensity of the digital optical signal 1000 to a value above the threshold of sensitivity of the modulation and dispersion device 200 and of the clock recovery 23.

The optical beam splitter 22 is, for example, a conventional 1x2 fused fibre or in-waveguide coupler with one input and two outputs, one connected to the modulation and dispersion device 200 and the other to the clock recovery 23.

Preferably, the optical beam splitter 22 is capable of transmitting to the output connected to the clock recovery 23 a fraction of intensity smaller than that transmitted to the output connected to the modulation and dispersion device 200. For example, it transmits a tenth of the intensity of the digital optical signal 1000 at its input to the clock recovery 23, and the remaining nine tenths to the modulation and dispersion device 200.

The clock recovery 23 is a conventional opto-electronic device capable of

- photo-electrically detecting the fraction of intensity of the digital optical signal 1000 at its input and converting it into a corresponding electrical signal, and
- determining the bit rate $f_c$ of the said digital optical signal 1000 at its input and the synchronization with it.

Since the bits undergo distortions such as broadening in time and/or loss of timing with respect to the clock of the said first apparatus 10 during their propagation in the fibre, the clock recovery 23 typically extracts from the spectrum of the said electrical signal the spectral component relating to the said bit rate $f_c$ and synchronizes itself with the average central position of the time slot of the bits arriving at its input.

The modulation and dispersion device 200 collects the digital optical signal 1000 from the other output of the optical beam splitter 22 and processes it to minimize the distortions (broadening in time and/or loss of timing) which the bits undergo during their propagation in an optical fibre along the transmission line 30.

In particular, in the case of RZ pulses, the modulation and dispersion device 200 is capable both of restoring the initial shape of the bits, in other words the shape which the bits had when transmitted, before propagation in the optical fibre, and of retiming the bits in accordance with the synchronization determined by the said clock recovery.

The modulation and dispersion device 200 according to an embodiment of the invention comprises a phase modulation element 2000 and a dispersion element 204.

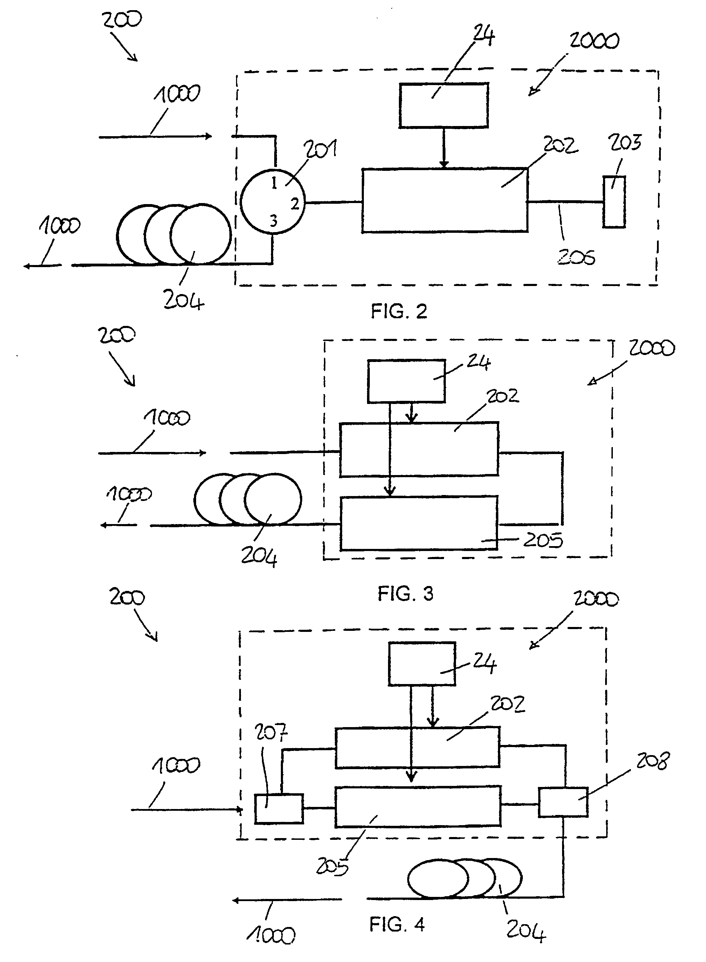

In the embodiment illustrated in Fig. 2, the phase modulation element 2000 comprises a conventional optical circulator 201, a phase modulator 202, a mirror 203 and an electronic driver device 24.

Alternatively, a conventional optical beam splitter of the optical fibre or planar waveguide type may be used in place of the said optical circulator 201.

The digital optical signal 1000 arriving at the port 1 of the optical circulator 201 is sent, through the port 2, towards the phase modulator 202 and then through a suitable section of optical fibre 206 to the mirror 203.

The mirror 203 is preferably a conventional Faraday mirror, in other words a device capable of reflecting the digital optical signal 1000 at its input backwards, towards the phase modulator 202, while simultaneously rotating its polarization state through 90°. Thus the digital optical signal 1000 passes through the phase modulator 202 on a first occasion with one polarization state, and on a second occasion with a polarization state orthogonal to the first (rotated through 90°).

The length of the section of optical fibre 206 is preferably chosen in such a way that the digital optical signal 1000, in its forward and return travel through this optical fibre 206, is delayed by a total time approximately equal to the period of the modulation carried out by the phase modulator 202 or to a whole-number multiple thereof.

The phase modulator 202 is typically a conventional device consisting, for example, of a waveguide on an $LiNbO_3$ substrate connected to two electrodes. Preferably, the said $LiNbO_3$ phase modulator is of the resonant type. Resonant phase modulators are described, for example, in Patent Application WO 99/09451 in the name of the Applicant.

The said $LiNbO_3$ phase modulator 202 is sensitive to the polarization of the optical signal at its input; in other words, it modulates the two orthogonal components of the polarization state of the digital optical signal 1000 in different ways. However, since the said digital optical signal 1000 passes through the phase modulator 202 twice, on each occasion with a polarization state orthogonal to the other, the two orthogonal components of its polarization state are modulated in the same way.

By controlling the potential difference V applied to the said electrodes connected to the phase modulator 202, a variation of the digital optical signal 1000 equal to $\alpha$ is obtained, where $\alpha$ is defined thus:

$$\alpha = \pi \frac{V}{V_\pi}$$

where $V_\pi$ is the potential difference which must be applied to obtain a phase difference of $\pi(\alpha=\pi)$.

For example, if a voltage V(t) which varies periodically in time is applied, it is possible to obtain a predetermined periodic variation in time $\alpha(t)$ of the phase variation $\alpha$. In this case, the maximum (or minimum) phase variation which can be obtained is conventionally defined as the modulation depth $\alpha_M$:

$$\alpha_M = \pi \frac{V_{max/min}}{V_\pi}$$

where $V_{max}$ and $V_{min}$ are the maximum or minimum potential difference applied to the electrodes of the phase modulator. When the said periodic variation in time $\alpha(t)$ has a positive modulation amplitude, the depth of modulation $\alpha_M$ is more than zero, whereas when the said periodic variation in time $\alpha(t)$ has a negative modulation amplitude, the depth of modulation $\alpha_M$ is less than zero.

In the present description and in the attached claims, the expression "positive modulation amplitude" is used to denote the situation in which the variation in time $\alpha(t)$ of the phase modulation is such that there is a maximum in the said average central position of the time slot, and a shift of the spectral components of a bit towards higher frequencies is caused before the said average central position and a shift towards lower frequencies is caused after the said average central position. The expression "negative modulation amplitude", on the other hand, is used to denote the situation in which the variation in time $\alpha(t)$ of the phase modulation is such that there is a minimum in the said average central position of the time slot, and a shift of the spectral components of a bit towards lower frequencies is caused before the said average central position and a shift towards higher frequencies is caused after the said average central position.

The electronic driver device 24 is a conventional device capable of driving the phase modulator 202 under the control of the clock recovery 23. More particularly, the electronic device 24 applies a potential difference V(t) to the said electrodes in such a way that the phase modulator 202 carries out a phase modulation of the digital optical signal 1000 characterized, according to the present invention, by

1) a modulation frequency selected in accordance with the bit rate $f_c$ determined by the clock recovery 23,

2) a periodic variation in time (time envelope of the phase $\alpha(t)$) synchronized with a predetermined point within the time slot and approximately symmetrical with respect to the said predetermined point (the maximum, or minimum, of the said variation in time is synchronized with respect to the said predetermined point);

3) a maximum amplitude K of the said variation in time, where

$$K = \frac{1}{2} \alpha_M \Omega^2$$

where $\Omega = 2\pi f_c$, and $f_c$ is the bit rate determined by the clock recovery 23. Additionally, K is greater or less than zero according to whether the periodic variation in time $\alpha(t)$ has a positive or a negative modulation amplitude.

Typically, the variation in time of the phase modulation is synchronized with the average central position of the time slot, determined by the clock recovery 23, and is approximately symmetrical with respect to this position.

Advantageously, in the case of bits in RZ format, the absolute value of the said maximum amplitude K is approximately equal to $[1/(2T^2)]$, where T has the meaning stated above.

The digital optical signal 1000 leaving the phase modulator 202, after its second passage through it, is sent through the port 3 of the optical circulator 201 to the dispersion element 204.

This dispersion element 204 introduces into the bits passing through it a group delay D having a value chosen in such a way that the product of the said maximum amplitude K and D is, according to the invention, in the range from A to B, where A is equal to $-0.5*(1-X)$ and B is equal to $-0.5*(1+Y)$, and X is less than or equal to 0.2 and Y is less than or equal to 2.

Advantageously, in the case of bits in RZ format, the absolute value of the said group delay D is approximately equal to $T^2$ (where T is defined as above).

When the variation in time $\alpha(t)$ of the phase modulation carried out by the phase modulator 202 has a positive modulation amplitude, the dispersion element 204 is typically characterized by a dispersion of the anomalous type ($\beta_2 < 0$), while when the variation in time $\alpha(t)$ of the phase modulation carried out by the phase modulator 202 has a negative modulation amplitude, the dispersion element 204 is preferably characterized by a dispersion of the normal type ($\beta_2 > 0$).

In the present description and in the attached claims, the expression "anomalous dispersion" is used to denote a situation in which the spectral components of an optical signal which have shorter wavelengths travel at a higher velocity than those which have longer wavelengths. On the other hand, the expression "normal dispersion" is used to denote the opposite situation, in which the spectral components of an optical signal which have shorter wavelengths travel at a lower velocity than those which have longer wavelengths.

In a first embodiment, the said dispersion element 204 consists of a section of single-mode optical fibre having a length L (typically expressed in km) and a chromatic dispersion $\beta_2$ (typically expressed in $ps^2/km$) chosen in such a way that the product of the said maximum amplitude K and the said group delay D (where $D = \beta_2 * L$) lies, according to the invention, in the range from A to B, where A and B have the values stated above.

In a second embodiment, the said dispersion element 204 consists of a conventional variable-period ("chirped") Bragg grating in an optical fibre. In this case also, the length L (typically expressed in km) and a chromatic dispersion $\beta_2$ (typically expressed in $ps^2/km$) are chosen in such a way that the product of the said maximum amplitude K and the said group delay D (where $D = \beta_2 * L$) lies, according to the invention, in the range from A to B, where A and B have the values stated above.

Finally, in a third embodiment, the said dispersion element 204 consists of a conventional pair of diffraction gratings. In this case, the group delay value D depends on the effective dispersion length L (typically expressed in m) of the pair of gratings and on a predetermined value of effective chromatic dispersion $\beta_2$ (typically expressed in $ps^2/km$) [G.P. Agrawal, "Nonlinear Fiber Optics", Academic Press, 2nd ed., 1995, pp. 203-207].

For example, in the case of an optical communication system according to the invention in which

- the bits are in RZ format;
- the optical pulses have an approximately Gaussian shape;
- $T_{FWHM} \cong 22.04$ ps,
- $T \cong 13.24$ ps,
- $f_c \cong 5$ GHz,
- $1/f_c$ (duration of the time slot) $\cong 200$ ps,

and, in the case in which the dispersion element 204 consists of an optical fibre having $\beta_2 = -20 \, ps^2/km$, then in the modulation and dispersion device 200 according to the invention

$\Rightarrow$ the phase modulator 202 carries out a modulation with positive amplitude,

$\Rightarrow K \cong 2.85 * 10^{-3} \, ps^{-2}$,

$\Rightarrow D \cong -175 \, ps^2$,

$\Rightarrow L \cong 8.75$ km.

In the embodiment illustrated in Fig. 3, the modulation and dispersion device 200 has the same structure and performs the same functions as that in Fig. 2, except that the phase modulation element 2000 comprises a first 202 and a second 205 phase modulator, having their axes of birefringence rotated through 90° with respect to each other, and the electronic driver device 24 for operating both the modulators.

In order not to lose the synchronization with the said predetermined point within the time slot, the electronic driver device 24 is preferably capable of allowing for the optical delay which the digital optical signal 1000 undergoes between the first phase modulator 202 and the second phase modulator 205.

In the embodiment illustrated in Fig. 4, the modulation and dispersion device 200 has the same structure and performs the same functions as those in Figs. 2 and 3, except that the phase modulation element 2000 comprises a first phase modulator 202 and a second phase modulator 205, a first polarization beam splitter (PBS) 207 and a second PBS 208.

At the input of the modulation and dispersion device 200, the PBS 207 separates the two orthogonal polarization components of the digital optical signal 1000, of which one component is modulated by the phase modulator 202 and the other is modulated by the phase modulator 205. At the output of the two phase modulators 202, 205, the said two orthogonal polarization components are recombined by the second PBS 208 and sent to the dispersion element 204.

The PBS 207, 208 are conventional devices, preferably of the optical fibre, planar waveguide or micro-optic type.

In another embodiment (not illustrated), the phase modulation element 2000 consists of a single phase modulator which is not sensitive to the polarization of the incident optical signal. Since it is not sensitive to the polarization of the incident optical signal, this embodiment does not require two phase modulators and/or elements for rotating the polarization state of the optical signal (such as the mirror in Fig. 2) or for separating its two orthogonal polarization components (such as the PBS in Fig. 4) or for reflecting the said optical signal (such as the mirror in Fig. 2).

In another embodiment (not illustrated), the phase modulation element 2000 consists of a non-linear element (such as a section of optical fibre or a semiconductor amplifier) in which the digital optical signal is propagated together with a suitable optical control signal. The latter has a wavelength which is preferably different from that of the digital optical signal 1000 and a predetermined power value such as to cause, by the known Kerr effect, a predetermined "cross phase modulation", in other words a predetermined phase modulation of the digital optical signal 1000.

The characteristics of the said predetermined phase modulation have already been described in detail in relation to the phase modulator 202. Reference should therefore be made to the above text for details of these.

As shown in Fig. 1b, the digital optical signal 1000, having been processed in this way by the said modulation and dispersion device 200, is amplified by the optical amplifier 27 and photo-electrically detected by the said conventional receiving device 40, and is then sent to any subsequent processing stages.

The optical amplifier 27 is, for example, a conventional amplifier of the active fibre type doped with rare earths, or of the semiconductor type.

In another embodiment (not shown), the optical communication system according to the invention has the same structure and performs the same functions as that in Fig. 1, except that it transmits simultaneously, in the same optical transmission line, M (where M ≥ 1) digital optical signals, each having a predetermined wavelength.

More particularly, the optical transmission system comprises M transmitting apparatus for supplying the said M digital optical signals and a conventional wavelength multiplexer for simultaneously transmitting the said M digital optical signals along the said optical transmission line. The said optical transmission system also comprises a conventional wavelength demultiplexer for separating the said M digital optical signals at the output of the said optical transmission line and M receiving apparatus (one for each of the said M digital optical signals). Each receiving apparatus comprises an optical beam splitter, a clock recovery and a modulation and dispersion device according to the invention.

For details of the characteristics of the said transmitting apparatus, the said optical transmission line, the said receiving apparatus, the said clock recovery and the said modulation and dispersion device according to the invention, reference should be made to the above description of the embodiments of the optical communication system according to the invention shown in Figs. 1a and 1b

In the case in which the said M digital optical signals supplied by the said M transmitting apparatus have characteristics (such as wavelength and/or bit rate and/or format) different from those required by the optical transmission line, the said optical communication system preferably also comprises interface units capable of receiving the said M digital optical signals supplied by the said M transmitting apparatus and of matching them to the characteristics required by the optical transmission line. For example, the said interface units supply at their outputs M digital optical signals having wavelengths within the operating bandwidth of the optical amplifiers arranged in cascade along the said optical transmission line.

US Patent 5267073 describes interface units comprising, in particular, a transmission adapter capable of converting an input optical signal into a form matched to the optical transmission line, and a reception adapter capable of reconverting the transmitted signal into a form suitable for a receiving apparatus.

Although an optical communication system comprising a transmitting apparatus, an optical transmission line with a cascade of optical amplifiers and a receiving apparatus comprising a modulation and dispersion device according to the invention has been described by way of example, the optical communication system according to the invention may also comprise, along the transmission line, other devices such as optoelectronic regenerators, optical-optical regenerators, signal insertion/extraction (add-drop) devices, and switching nodes of an optical network where multiple communication lines converge and originate, and the modulation and dispersion device according to the invention may also be connected in the optical transmission line, in association with one of the said regenerators for example, according to criteria which are evident to the person skilled in the art on the basis of the present description and without departure from the principle of the invention.

Typical examples of optical-optical regenerators have been described by L. Billès et al. ["20 Gbit/s Optical 3R Regenerator using SOA based Mach-Zehnder Interferometer Gate", ECOC September (1997), No. 448, pp. 269-272] and by D. Chiaroni et al. ["New 10 Gbit/s 3R NRZ optical regenerative interface based on semiconductor optical amplifiers for all-optical networks", ECOC September (1997), No. 448, pp. 41-44].

The inventors have carried out computer simulations in order to verify the behaviour of the modulation and dispersion device 200 according to the invention for compensating the PMD in a digital optical signal which is propagated along an optical fibre transmission line.

In these simulations, a train of pulses (RZ transmission system) having a Gaussian shape, a duration $T_{FWHM}$ of 27.5 ps and a pulse modulation frequency of 10 GHz was considered. In order to represent the effects of PMD, each pulse was separated into two pulses, one delayed with respect to the other by a random quantity $\Delta\tau$ characterized by a conventional Maxwell distribution and by a mean value $<\Delta\tau>$. The pulses produced in this way were detected by a photodetector and the eye diagram was then determined in two different cases. In the first case, the pulses leaving the photodetector were examined directly, while in the second case the pulses leaving an electrical filter located after the photodetector were examined. This second case is a more accurate representation of the situation in a conventional receiving apparatus which is typically provided with an electrical filter.

In the simulations, the electrical filter was assumed to be a conventional fourth-order Bessel-Thompson filter with a bandwidth equal to 0.8 times the modulation frequency.

As is known, the eye diagram can be used to evaluate the performance of a transmission system. The level of closure of the eye gives an indication of the distortion undergone by the shape of the pulses of a signal, and, therefore, the probability of error in reception. For example, an eye closure of 1 dB is conventionally considered to correspond to a probability of error in reception of $10^{-9}$.

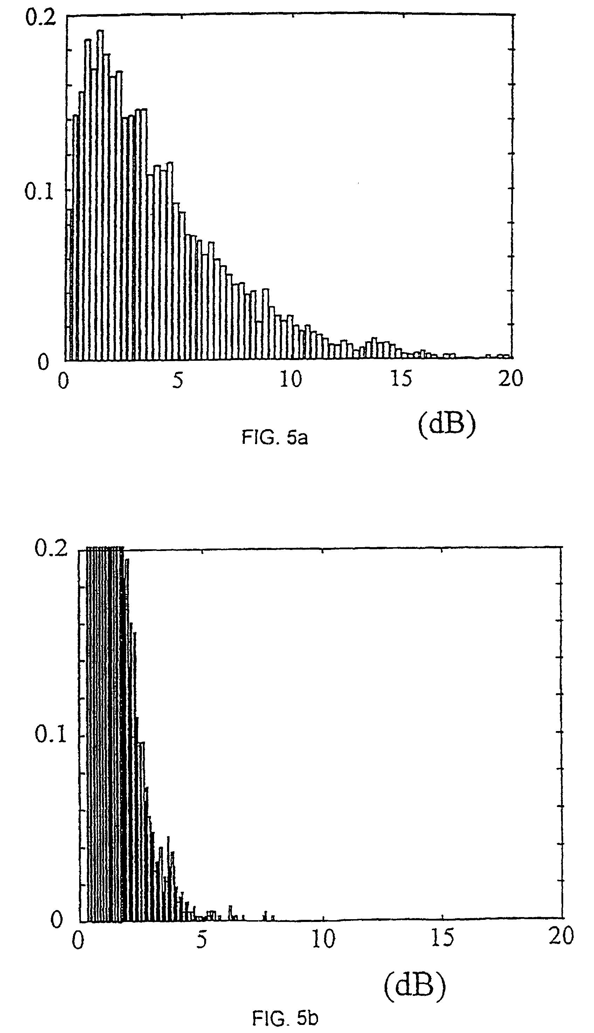

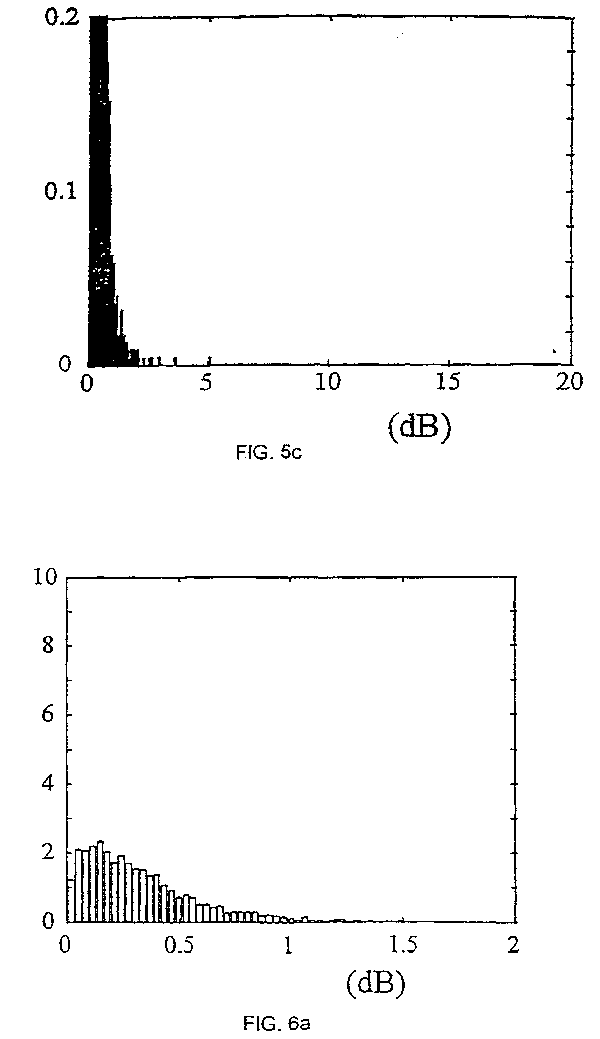

Fig. 5 shows the results thus obtained in the first case (no electric filter) for the probability density as a function of the closure of the eye diagram (expressed in dB) with $<\Delta\tau>$ = 30 ps. Fig. 5a shows the results obtained in the absence of the modulation and dispersion device 200, while Figures 5b and 5c show those obtained with the modulation and dispersion device 200. In the case of Fig. 5b, for the modulation and dispersion device 200, it was assumed that:

- $\alpha_M$ = 0.3 $\pi$;
- modulation frequency = 10 GHz;
- the variation in time of the phase modulation was sinusoidal;
- the modulation amplitude was positive;
- the dispersion was anomalous;
- D = -272.8 $ps^2$.

In the case of Fig. 5c, the same parameters were used as in the case of Fig. 5b, except that a variation in time of the phase modulation was assumed to be of the truncated cosine type (approximately parabolic).

As shown in Fig. 5a, in the absence of the modulation and dispersion device 200 a mean value ($m_{EC}$) of closure of the eye diagram was found to be 4.15 $\pm$ 3.43 dB, while with the modulation and dispersion device 200 this mean value ($m_{EC}$) was reduced to 1.16 $\pm$ 0.82 dB in the case of Fig. 5b (where the variation in time of the phase modulation was of the sinusoidal type) and to 0.2 $\pm$ 0.25 dB in the case of Fig. 5c (where the variation in time of the phase modulation was of the truncated cosine type). In other words, with the modulation and dispersion device according to the invention, the mean value ($m_{EC}$) of closure of the eye diagram was reduced, respectively, to approximately 27.9% and approximately 4.82% of the value found in its absence.

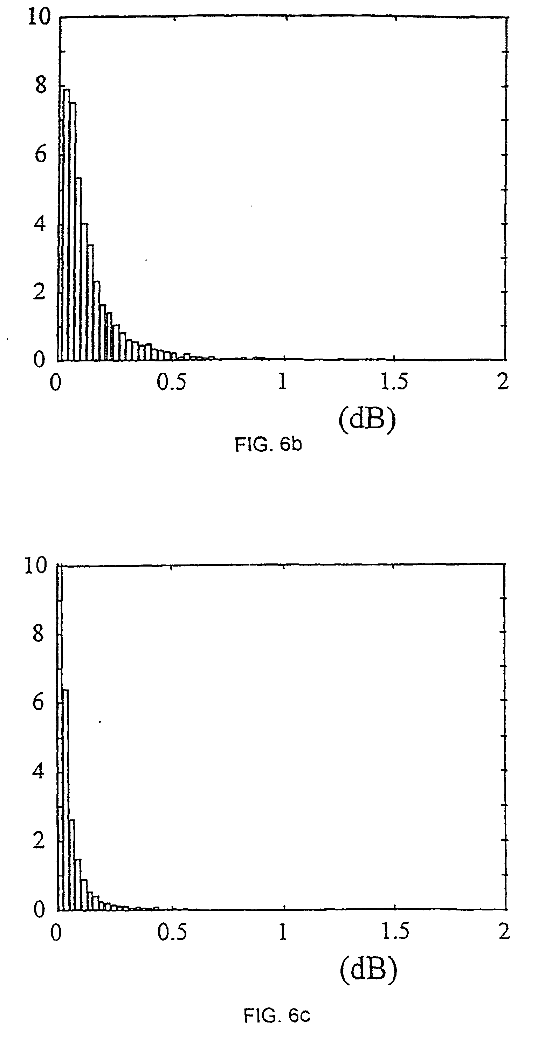

Fig. 6 shows the values of the probability density as a function of the closure of the eye diagram (expressed in dB) which were found in the same conditions as those of Fig. 5, except for the fact that the aforesaid electrical filter was used.

As shown in Fig. 6a, in the absence of the modulation and dispersion device 200 a mean value ($m_{EC}$) of closure of the eye diagram was found to be 0.34 $\pm$ 0.29 dB, while with the modulation and dispersion device 200 this mean value ($m_{EC}$) was reduced to 0.14 $\pm$ 0.16 dB in the case of Fig. 6b (where the variation in time of the phase modulation was of the sinusoidal type) and to 0.03 $\pm$ 0.08 dB in the case of Fig. 6c (where the variation in time of the phase modulation was of the truncated cosine type). In other words, with the modulation and dispersion device according to the invention, the mean value ($m_{EC}$) of closure of the eye diagram was reduced, respectively, to approximately 41.2% and approximately 8.8% of the value found in its absence.

Experimental tests were also carried out in order to check the application of the modulation and dispersion device 200 according to the invention for compensating the PMD in a digital optical signal which is propagated along an optical fibre transmission line.

In a first series of measurements, some functional characteristics of the modulation and dispersion device according to the invention were confirmed.

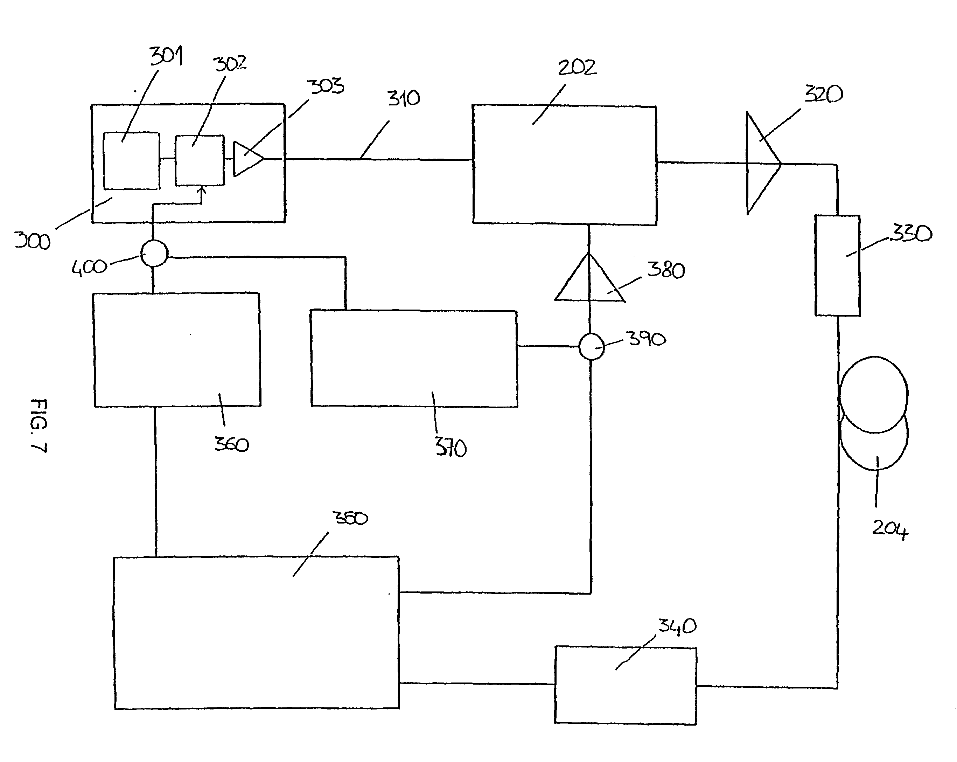

The experimental set-up used (shown in Fig. 7) comprised an electrical radio-frequency signal generator 360, a source 300 of optical pulses, a polarization maintenance fibre 310, a phase modulator 202, an electrical phase shifter 370, an electrical radio-frequency amplifier 380, an optical amplifier 320, a variable attenuator 330, an optical fibre 204, a photo-receiver 340, a digital oscilloscope 350, and two electrical power splitters 390 and 400.

The source 300 comprised a laser source 301, an amplitude modulator 302 and a polarization maintenance optical amplifier 303.

The laser source 301 was the FU-68PDF-51PRLxx model made by Mitsubishi with continuous emission at 1555 nm, the amplitude modulator 302 was an $LiNbO_3$ Mach Zehnder modulator produced by the applicant, and the optical amplifier 303 was a device also produced by the applicant.

The generator 360 was a 5 GHz electrical signal generator made by Hewlett-Packard Co. -Syntetizer, model 8375 2B.

The polarization maintenance fibre 310 was a conventional PANDA™ fibre.

The phase modulator 202 was an $LiNbO_3$ device produced by the applicant.

The optical amplifier 320 was a 14 dBm device produced by the applicant and marketed under the name of OLA/E MW.

The variable attenuator 330 is a conventional optical device produced and marketed by E-TEK Dynamics Inc.

The optical fibre 204 was a section of single-mode fibre of the step-index type, having a length of approximately 50 km and produced by FOS.

The photo-receiver 340 was a high-speed photodiode having a bandwidth of 12 GHz, produced by Hewlett-Packard Co.

The electrical phase shifter 370 was a 0-18 GHz Macom FSC 9341 device.

The electrical radio-frequency amplifier 380 was a device made by Era Technology Ltd.

The digital oscilloscope 350 was a device made by Tektronix Inc., model CSA 803 A.

The two electrical power splitters 390 and 400 were 0-12 GHz devices made by Suhner, model 4901.19.A.

The radio-frequency generator 360 was used to supply an electrical signal at the frequency of 5 GHz. This signal was used to drive the amplitude modulator 302, the phase shifter 370 and the digital oscilloscope 350.

Under the control of the said electrical signal, the amplitude modulator 302 thus amplitude modulated, at the frequency of 5 GHz, the optical signal at 1555 nm leaving the laser source 301, in such a way as to supply a train of optical pulses having:

- a bit rate $f_c$ of 5 GHz (time slot 200 ps),
- a substantially Gaussian shape,
- RZ format,
- $T_{FWHM} \cong 53.9$ ps, and
- $T \cong 32.4$ ps.

The power of the modulated optical signal was then amplified by the optical amplifier 303 to provide a power of approximately 6 dBm and the optical signal amplified in this way was sent to the phase modulator 202 through the optical fibre 310. To maintain the polarization state of the modulated optical signal, the amplifier 303 and the optical amplifier 310 were selected from those of the polarization maintenance type. This made it possible to use a single phase modulator 202.

The phase modulator 202, driven by the electrical signal at 5 GHz, was used to carry out a phase modulation of the train of optical pulses, the said modulation being characterized by

- a modulation frequency of 5 GHz,
- a sinusoidal periodic variation in time, having its peaks synchronized with the peaks of intensity of the optical pulses (positive modulation amplitude);
- a modulation depth $\alpha_M$ of approximately 0.53 $\pi$.

The power of the optical pulses phase modulated in this way was then amplified by the optical amplifier 320 before the 50 km section of optical fibre 204. The power level of the amplified optical pulses was then adjusted by means of the variable attenuator 330 in such a way as to limit the non-linear phenomena in the optical fibre 204 and to ensure that virtually only the chromatic dispersion was present in it.

The optical fibre 204 had a dispersion value $\beta_2$ = -21 $ps^2$/km (anomalous. dispersion), resulting in a group delay $D \cong \beta_2 * L \cong -T^2 \cong 1050$ $ps^2$.

After propagation in the optical fibre 204, the optical pulses were photo-electrically detected by the photodetector 340, and their waveform was displayed by the digital oscilloscope 350.

The phase shifter 370 was used to change the relative temporal positions of the peaks of the sinusoidal variation of the phase modulation and the peaks of intensity of the train of optical pulses.

When they were found to have lost their timing with respect to the sinusoidal variation of the phase modulation (the peaks of intensity of the optical pulses were no longer synchronized with the peaks of the sinusoidal variation of the phase modulation), the optical pulses were processed, according to the invention, by the phase modulator 202 and by the optical fibre 204 in such a way as to restore the initial synchronization with the sinusoidal variation of the phase modulation.

Since the digital oscilloscope 350 displayed both the train of pulses and the variation of the phase modulation, it was possible to measure the time shift which was introduced into the optical pulses with a variation in their time off-set with respect to the sinusoidal variation of the phase modulation.

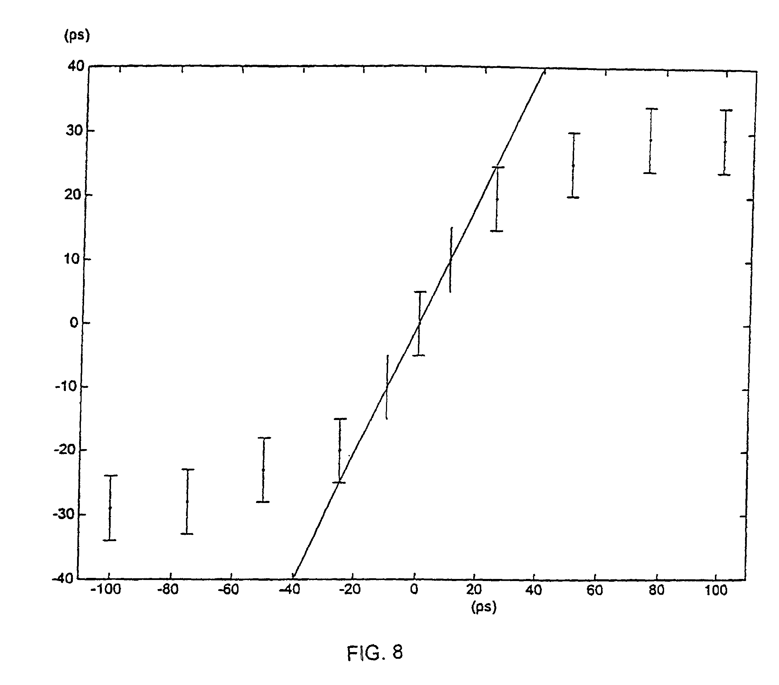

Fig. 8 shows both the values obtained experimentally (broken line) for the time shift (expressed in ps) of the optical pulses as a function of the time off-set (expressed in ps) and the values which would have been found in an ideal situation of total compensation of the time off-set (continuous line). The reading error of the oscilloscope (approximately ±5 ps) is also shown for each measured point.

With time off-sets of 10 ps, 25 ps, 50 ps, 75 ps and 100 ps, time shifts of the optical pulses of approximately 10 ps, 20 ps, 25 ps, 29 ps and 29 ps respectively were found.

The modulation and dispersion device according to the invention, which uses a sinusoidal phase modulation as in the experimental set-up in Fig. 7, can be used, for example, to compensate the effects of PMD in an optical transmission system with an optical transmission line comprising a conventional optical fibre having a PMD of 1 ps*km$^{-1/2}$ and a length of 500 km (in other words, a line which can introduce a delay of approximately 22.4 ps into the polarization modes of an optical pulse).

As shown by the simulations, even better results may be obtained by using phase modulation of the truncated cosine type (in other words of the approximately parabolic type).

A second series of measurements was carried out to evaluate the effect of PMD on the performance of an optical communication system according to the invention, comprising a modulation and dispersion device according to the invention, and on those of a comparison system having the same characteristics as the system according to the invention except for the fact that it does not comprise the said modulation and dispersion device according to the invention.

These measurements were made initially on a digital optical signal in RZ format and subsequently on a digital optical signal in NRZ format.

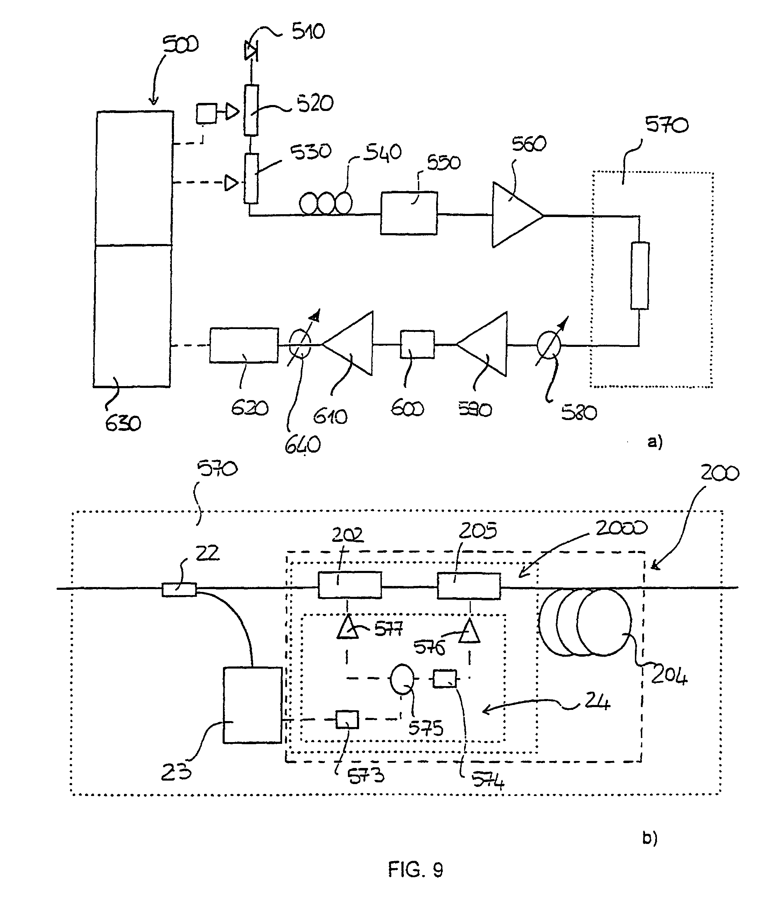

The experimental set-up (shown in Fig. 9a) used in the case of the digital optical signal in RZ format comprised a pattern generator 500, a laser source 510, a first 520 and a second 530 amplitude modulator, a polarization controller 540, a PMD emulator 550, a first optical amplifier 560, a PMD compensator 570, a first variable attenuator 580, a second optical amplifier 590, an optical filter 600, a third optical amplifier 610, a second variable attenuator 640, a receiver 620 and an error detector 630.

The pattern generator 500 was a "Pulse Pattern Generator" made by Anritzu, model MP1763B.

The laser source 510 was the FU-68PDF-51PRLxx model made by Mitsubishi with continuous emission at 1555 nm.

The two amplitude modulators 520, 530 were two modulators of the LiNbO$_3$ Mach Zehnder type produced by the applicant.

The polarization controller 540 was a "Programmable Polarization Controller Driver" device made by E-TEK Dynamics Inc., model FPCR-1B.

The PMD emulator was a "PMD Emulator" made by JDS, model PE4.

The three optical amplifiers 560, 590, 610 were 14 dBm devices produced by the applicant and marketed under the name of OLA/E - MW.

The two variable attenuators 580, 640 were conventional optical devices produced and marketed by E-TEK Dynamics Inc.

The optical filter 600 was a micro-optics bandpass filter, namely an "interferential tunable filter" made by JDS, with a bandwidth of 1.3 nm.

The receiver 620 was an SRX "Soliton receiver" produced and marketed by the applicant.

The error detector 630 was an "Error Detector" made by Anritzu, model MP1764A.

Additionally, the PMD compensator 570 consisted (Fig. 9b) of an optical splitter 22, a clock recovery 23 and a modulation and dispersion device 200 according to the invention.

The modulation and dispersion device 200 comprised a phase modulation element 2000 and a dispersion element 204. Additionally, the phase modulation element 2000 comprised a first 202 and a second 205 phase modulator and an electronic driver device 24 comprising a first 573 and a second 574 electrical phase shifter, an electrical power splitter 575, and a first 576 and a second 577 electrical amplifier.

The optical splitter 22 was a conventional device made by E-TEK Dynamics Inc., capable of sending approximately 5% of the optical power to the input of the clock recovery 23 and approximately 95% to the two phase modulators 202, 205.

The clock recovery 23 consisted of a PIN photodiode with a bandwidth of 10 GHz made by Sumitomo, a limiting amplifier made by Multilink and a 10 GHz clock recovery device made by Veritech.

The electrical phase shifters 573, 574 were 0-18 GHz Macom FSC devices.

The electrical amplifiers 576, 577 were radio-frequency amplifiers made by Era Technology Ltd.

The electrical power splitter 575 was a 6 dB electrical radio-frequency splitter made by Suhner, model 4901.19.A, operating at 0-12 GHz.

The two phase modulators 202, 205 were LiNbO$_3$ devices produced by the applicant. Additionally, they were connected in series and had their axes of birefringence rotated through 90° with respect to each other to modulate in virtually the same way the two orthogonal polarization components of the input digital optical signal.

The dispersion element 204 consisted of a section of single-mode optical fibre of the step-index type, having a length of approximately 20 km and produced by FOS.

The pattern generator 500 was used to drive the first amplitude modulator 520 so that it supplied a train of optical pulses, while the second amplitude modulator 530 was used to modulate the said train of optical pulses in accordance with the digital information to be transmitted. The bit rate used was 10 GHz.

The optical pulses had:

- a bit rate $f_c$ of 10 GHz (time slot of 100 ps),
- an approximately Gaussian shape,
- an RZ format, and
- $T \cong 20.5$ ps.

Thus a digital optical signal in RZ format was sent to the input of the polarization controller 540.

In order to allow for the PMD introduced by an optical fibre transmission line into the digital optical signal, the two fundamental polarization modes of the incoming bits were delayed by a time $\Delta\tau$ by means of the polarization controller 540 and the PMD emulator 550. In order to verify the capacity of the modulation and dispersion device according to the invention to compensate different values of PMD, the said two fundamental polarization modes were delayed by a time $\Delta\tau$ which was varied from time to time.

At the output of the PMD emulator 550, the power of the digital optical signal was amplified by the optical amplifier 560 to provide a power of approximately 6 dBm.

Part (approximately 5%) of the optical signal amplified in this way was sent to the clock recovery 23 and part (approximately 95%) was sent to the two phase modulators 202, 205.

The clock recovery 23 recovered, from the optical signal at its input, the bit rate and the synchronization with the average central position of the time slot of the incoming bits.

Additionally, the two phase shifters 573, 574 made it possible to maintain synchronization with the said average central position of the time slot, recovered by the clock recovery 23.

The two phase modulators 202, 205 modulated the bits at their input by a phase modulation having, according to the invention,

- a modulation frequency of 10 GHz,
- a sinusoidal periodic variation in time having its peaks synchronized with the peaks of intensity of the optical pulses (positive modulation amplitude); and
- a depth of modulation $\alpha_M$ equal to approximately 1.2 rad.

The digital optical signal, phase modulated in this way, was then propagated along the optical fibre 204 which had a dispersion value $\beta_2$ = -21 ps$^2$/km (anomalous dispersion), resulting in a group delay D $\cong$ $\beta_2$*L $\cong$ -T$^2$ $\cong$ -420 ps$^2$.

From time to time, the power level of the optical signal leaving the optical fibre 204 was adjusted by means of the variable attenuator 580 in such a way as to obtain different values of the optical signal-to-noise ratio at the input of the receiver 620.

The power of the optical signal was then amplified by the amplifier 590, filtered by the optical filter 600 (in such a way as to eliminate much of the ASE generated by the up-line optical amplifiers), and then amplified again by the optical amplifier 610.

The variable attenuator 640 was also used to obtain an optimal optical power at the input of the receiver 620.

The optical signal was thus received by the receiver 620, and the error detector 630 was used to determine the probability of error (Bit Error Rate, BER) with a variation of the optical signal-to-noise ratio at the input of the receiver 620 and a variation of the delay $\Delta\tau$ introduced between the two orthogonal polarization components of the bits.

In order to compare the performance of the optical communication system according to the invention, having the modulation and dispersion device according to the invention for compensating the PMD, with those of the comparison optical communication system without the said modulation and dispersion device, the measurements were made firstly with the set-up in Fig. 9, and secondly by removing all the elements of the PMD compensator 570 except the optical fibre 204 from the experimental set-up in Fig. 9.

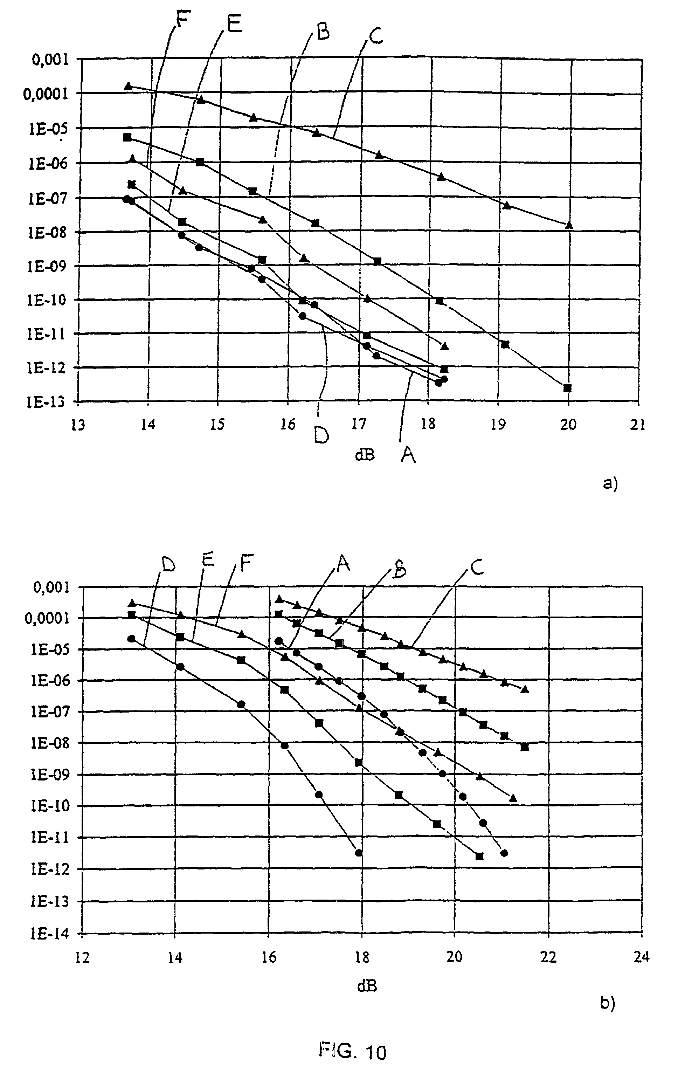

Fig. 10(a) shows the values of BER which were obtained with a variation of the signal-to-noise ratio (expressed in dB) for a delay $\Delta\tau$ of 0 ps (curve A), 40 ps (curve B) and 50 ps (curve C), with the comparison system, and for a delay $\Delta\tau$ of 0 ps (curve D), 40 ps (curve E) and 50 ps (curve F), with the system according to the invention.

As may be seen in Fig. 10(a), curves A and D virtually coincide for a $\Delta\tau$ of 0 ps; in other words, in the absence of PMD, the performances of the system according to the invention and of the comparison system are virtually the same.

For a $\Delta\tau$ of 40 ps, the values of BER obtained with the system according to the invention are considerably better (for the same signal-to-noise ratio) than those obtained with the comparison system. Additionally, with the system according to the invention the values of BER become very close to those which would be obtained in the absence of PMD (curve E is very similar to curves A and D). The modulation and dispersion device according to the invention is therefore capable of providing practically complete compensation of the said time delay $\Delta\tau$ of 40 ps introduced by PMD into the two fundamental polarization modes of the digital optical signal.

Finally, even for a $\Delta\tau$ of 50 ps, the values of BER obtained with the system according to the invention are considerably better than those obtained with the comparison system.

The same measurements of BER were then made on a digital optical signal in NRZ format. The experimental set-up used (not shown) was identical to that in Fig. 9, except for the fact that the first amplitude modulator 520 was absent and the continuous optical signal leaving the laser source 510 was sent directly to the input of the second amplitude modulator 530 in such a way as to supply an optical signal comprising a flow of NRZ bits modulated in accordance with the digital information transmitted at the bit rate of 10 GHz.

Fig. 10 (b) shows the values of BER which were thus obtained with a digital optical signal in NRZ format with a variation of the signal-to-noise ratio (expressed in dB) for a delay $\Delta\tau$ of 0 ps (curve A), 40 ps (curve B) and 50 ps (curve C), with the comparison system, and for a delay $\Delta\tau$ of 0 ps (curve D), 40 ps (curve E) and 50 ps (curve F), with the system according to the invention.

As may be seen in Fig. 10(b), curves A and D no longer coincide as they did in the case of a digital optical signal in RZ format, and the values of BER obtained with the system according to the invention are much better than those obtained with the comparison system. The modulation and dispersion device according to the invention therefore appears to be capable of improving the characteristics of a digital optical signal in NRZ format, and consequently the performance of the system in terms of BER, even in the case in which the said signal has not undergone alterations due to PMD.

For a $\Delta\tau$ of 40 ps, the values of BER obtained with the system according to the invention are considerably better (for the same signal-to-noise ratio) than those obtained with the comparison system. Additionally, with the system according to the invention the values of BER become very close to those which would be obtained in the absence of PMD (curve E is much closer to curve D than curve B is). The modulation and dispersion device according to the invention is therefore capable of providing practically complete compensation of the said time delay $\Delta\tau$ of 40 ps introduced by PMD into the two fundamental polarization modes of the digital optical signal.

Finally, even for a $\Delta\tau$ of 50 ps, the values of BER obtained with the system according to the invention are considerably better than those obtained with the comparison system.

Further computer simulations were carried out by the inventors in order to verify the performance of the optical communication system according to the invention, comprising the modulation and dispersion device according to the invention for compensating the chromatic dispersion in a digital optical signal which is propagated along an optical fibre transmission line.

More particularly, they simulated the propagation of a digital optical signal in a non-linear dispersive medium by the known "split-step Fourier" method.

The simulations were carried out in the following way.

The transmission of a digital optical signal at a single wavelength with a bit rate of 10 GHz was considered.

This digital optical signal was sent along a conventional optical transmission line comprising

- 6 sections of conventional optical fibre of the step-index type, each having a length of 100 km, an attenuation of 0.25 dB/km and a chromatic dispersion $\beta_2$ of approximately -20 ps$^2$/km;
- an optical power amplifier (booster) in the transmission section;
- 5 optical line amplifiers;
- an optical preamplifier in the reception section;
- a conventional chromatic dispersion compensator connected to each optical line amplifier and to the optical preamplifier.

The said conventional chromatic dispersion compensator typically consists of a conventional optical circulator and a suitable variable-period (chirped) optical fibre Bragg grating, for example that described, as mentioned above, by K.O. Hill et al. ("Chirped in fiber Bragg gratings for compensation of optical fiber dispersion", Optics Letters, vol. 19, No. 17, pp. 1314-1316, 1994).

The value of compensation of the chromatic dispersion provided by the various conventional line compensators and by the conventional compensator connected to the optical preamplifier in the reception section was varied in the course of the simulations.

A mean power of 11 dBm at the output of each optical amplifier was assumed.

The digital optical signal leaving the said optical transmission line was then received by a receiving apparatus, located after the optical preamplifier and comprising

- an optical filter with a bandwidth of 0.5 nm,
- a modulation and dispersion device according to the invention; and
- an optical receiver with a bandwidth of 7.5 GHz.

The noise contributions due to the spontaneous emission of the optical amplifiers and to the well-known non-linear phenomena were also taken into account.

The penalties on the closure of the eye diagram of the optical signal received in this way were determined for two different cases. In the first case, the transmission of a digital optical signal in NRZ format was considered, while in the second case the transmission of a digital optical signal in RZ format, in which the pulses had a duration at half height $T_{FWHM}$ of approximately 35 ps, was considered.

Additionally, in both cases, in order to compare the characteristics of an optical communication system according to the invention, comprising a modulation and dispersion device according to the invention, with those of a comparison system completely identical to that of the invention except for the fact that it does not comprise the said modulation and dispersion device according to the invention, the simulations were carried out both in the presence and in the absence of the aforesaid modulation and dispersion device according to the invention in the said receiving apparatus.

For the purpose of the present invention the expression "penalty on the closure of the eye diagram" is used to denote the difference between the aperture of the eye (expressed in dB) obtained with the digital optical signal as transmitted and that obtained with the digital optical signal as received.

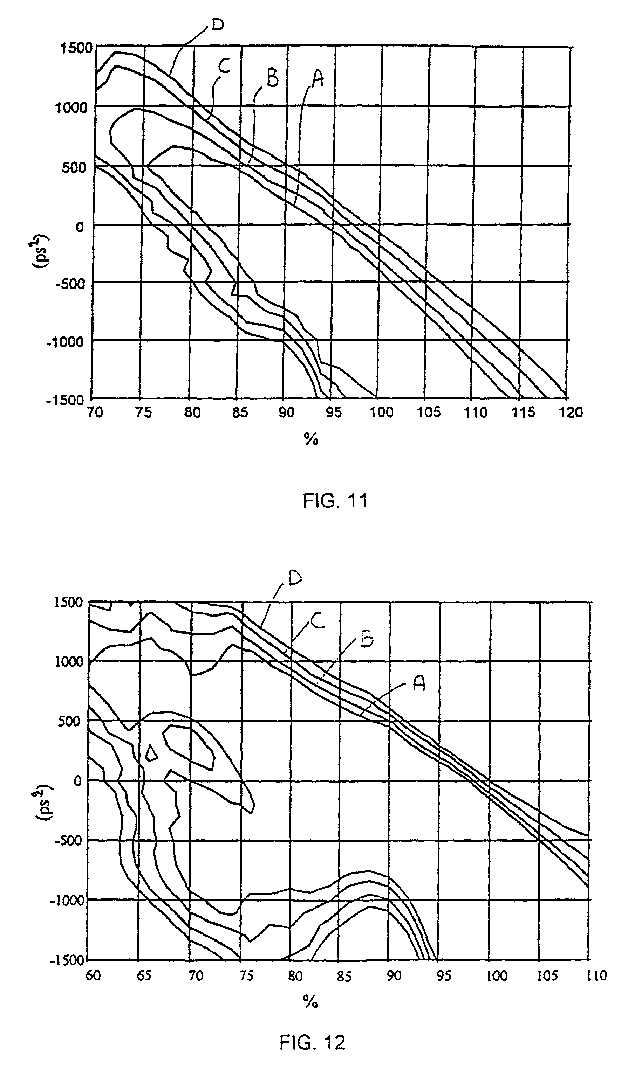

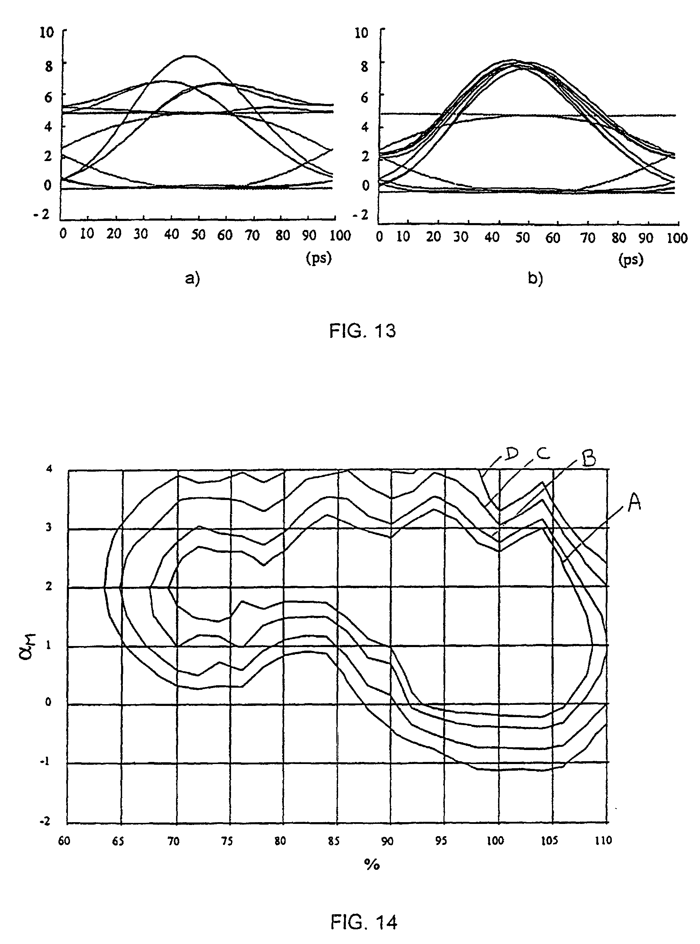

The results obtained in the case of NRZ format are shown in Figures 11 and 13(a), for the comparison system, and in Figures 12, 13(b) and 14, for the system according to the invention.

Fig. 11 shows a diagram of the level curves obtained for penalty values of 0.5 dB (curve A), 1 dB (curve B), 2 dB (curve C) and 3 dB (curve D) with a variation in the percentage of compensation provided by the conventional line compensators and that of the post-compensation provided by the conventional compensator connected to the preamplifier, where

- the compensation provided by the conventional line compensators is expressed as a percentage of compensated chromatic dispersion; while
- the post-compensation is expressed in ps, in other words as the total value of compensated chromatic dispersion.

As may be seen in Fig. 11, the area contained by the level curves is very small for the comparison system. For example, for a zero value of post-compensation, the percentage of compensation which has to be provided by the conventional line compensators to obtain a penalty of less than 0.5 dB lies between approximately 82% and 94%, in other words in a range of less than 15%.

Fig. 12, on the other hand, shows a diagram of the level curves obtained for the system according to the invention for penalty values of 0.5 dB (curve A), 1 dB (curve B), 2 dB (curve C) and 3 dB (curve D) with a variation in the percentage of compensation provided by the conventional line compensators and that of the post-compensation. For the modulation and dispersion device according to the invention, a value of depth of modulation $\alpha_M$ equal to 3 rad and a value of the group delay D equal to -200 ps$^2$ were assumed.

When the results of Fig. 11 are compared with those of Fig. 12, it may be seen that the area contained by the level curves with the system according to the invention is considerably wider than that found with the comparison system. More particularly, for the various values of post-compensation, the percentage of compensation which has to be provided by the conventional line compensators to obtain a penalty of less than 0.5 dB lies within a much wider range for the system according to the invention than that found with the comparison system. For example, for a value of post-compensation of approximately -600 ps$^2$, the percentage of compensation which has to be provided by the conventional line compensators to obtain a penalty of less than 0.5 dB lies within a range of

The system according to the invention with the modulation and dispersion device according to the invention is therefore much more flexible than the comparison system, in terms of the percentage of compensation of chromatic dispersion which has to be provided along the optical transmission line by the conventional compensation devices. This is because it makes it possible to increase considerably, with respect to the comparison system, the tolerance on the percentage of compensation of chromatic dispersion which has to be provided along the optical transmission line by the conventional compensation devices to ensure a desired penalty value in reception.

This flexibility is very important, for example, in the well-known multiple-wavelength (Wavelength Division Multiplexing, WDM) optical communication systems, in which the compensation of the chromatic dispersion by the conventional line compensators has to be provided simultaneously on a plurality of signals at different wavelengths (channels).

This is because, in this case, the chromatic dispersion acts in a different way on the various channels at different wavelengths, and the conventional compensators are not capable of equalizing this chromatic dispersion imbalance between one channel and another. Therefore, since conventional compensators by themselves are not capable of compensating the same percentage of chromatic dispersion for all the channels, in a conventional WDM communication system the number of usable channels is limited by the range of percentage of compensation tolerated by the system.

The system according to the invention with the modulation and dispersion device according to the invention, which increases this range of percentage of compensation tolerated by the system, consequently makes it possible to increase the number of channels which can be transmitted in a WDM system.

Fig. 13 also shows the eye diagram obtained with a mean percentage of compensation of 90% and a post-compensation of -600 ps$^2$ in the case of the comparison system (Fig. 13a) and in the case of the system according to the invention (Fig. 13b).

As may be noted, the aperture of the eye diagram with the system according to the invention, comprising the modulation and dispersion device according to the invention, is considerably better than that found with the comparison system.

Additionally, Fig. 14 shows a diagram of the level curves for penalty values of 0.5 dB (curve A), 1 dB (curve B), 2 dB (curve C) and 3 dB (curve D) which were obtained with a variation of the percentage of compensation provided by the conventional line compensators and of the depth of modulation $\alpha_M$ used in the modulation and dispersion device according to the invention. In this case, the group delay D was assumed to be -200 ps$^2$ and the value of post-compensation was assumed to be -400 ps$^2$.

As may be noted, it is possible, by suitable selection of the value of $\alpha_M$, to widen the area contained by the various level curves (and more particularly that contained by the curve for a penalty of 0.5 dB), and thus to increase the range of percentage of compensation of chromatic dispersion tolerated by the system to provide a penalty of less than 0.5 dB.

In the same conditions as those of the simulations (D = -200 ps$^2$), a value of $\alpha_M$ equal to approximately 2 rad corresponds, for example, to a value of the product K*D approximately equal to -0.79.

From time to time, depending on the parameters of the optical communication system in question, the person with average skill in the art will be capable of selecting, out of all the values of $\alpha_M$, and therefore of K, which satisfy the equation A < K*D < B (where A and B have the meanings shown above), the optimal value of $\alpha_M$ which can provide the desired percentage of compensation of chromatic dispersion tolerated by the system when a penalty of less than a desired value (typically equal to 0.5 dB) is to be obtained.

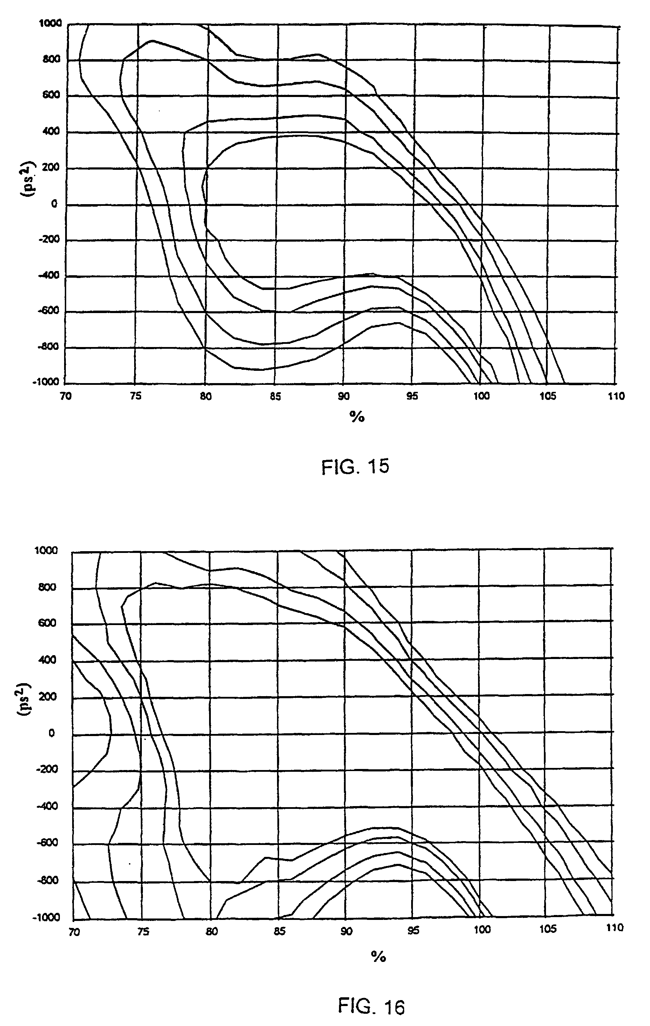

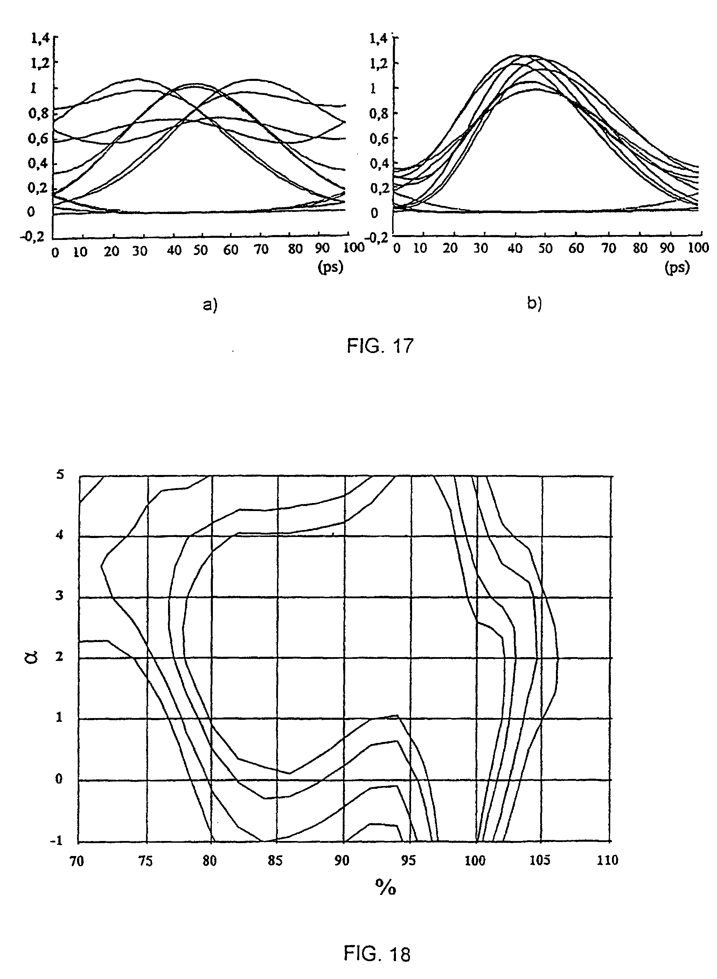

Finally, the results which were obtained in the case of a digital optical signal in RZ format are shown in Figures 15 and 17(a) for the comparison system, and in Figures 16, 17(b) and 18 for the system according to the invention.

Fig. 15 shows a diagram of the level curves for penalty values of 0.5 dB (curve A), 1 dB (curve B), 2 dB (curve C) and 3 dB (curve D) which were obtained with a variation of the percentage of compensation provided by the conventional line compensators and that of the post-compensation (expressed in ps) provided by the conventional compensator connected to the preamplifier.

As may be seen in Fig. 15, the area contained within the level curves for the comparison system is very small. For example, for a zero value of post-compensation, the percentage of compensation which must be provided by the conventional line compensators to obtain a penalty of less than 0.5 dB lies between approximately 80% and 95%, in other words within a range of approximately 15%.

Fig. 16, on the other hand, shows a diagram of the level curves for penalty values of 0.5 dB (curve A), 1 dB (curve B), 2 dB (curve C) and 3 dB (curve D) which were obtained for the system according to the invention, with a variation of the percentage of compensation provided by the conventional line compensators and that of the post-compensation. For the modulation and dispersion device according to the invention, a value of depth of modulation $\alpha_M$ equal to 2.7 rad and a value of group delay D equal to -160 ps$^2$ were assumed.

In this case also, when the results of Fig. 15 are compared with those of Fig. 16, it may be seen that the area contained by the level curves with the system according to the invention is considerably wider than that found with the comparison system. More particularly, for the various values of post-compensation, the percentage of compensation which has to be provided by the conventional line compensators to obtain a penalty of less than 0.5 dB lies within a much wider range for the system according to the invention than that found with the comparison system. For example, for a value of post-compensation of approximately -400 ps$^2$, the percentage of compensation which has to be provided by the conventional line compensators to obtain a penalty of less than 0.5 dB lies between approximately 78% and approximately 102% for the system according to the invention, in other words within a range of approximately 25%.

In this case also, in which the digital optical signal is in RZ format, the system according to the invention, with the modulation and dispersion device according to the invention, was therefore found to be much more flexible than the comparison system in terms of the percentage of compensation of chromatic dispersion which has to be provided along the optical transmission line by the conventional compensation devices. This is because it makes it possible to increase considerably, with respect to the comparison system, the tolerance on the percentage of compensation of chromatic dispersion which has to be provided along the optical transmission line by the conventional compensation devices to ensure a desired penalty value (typically 0.5 dB) in reception.

Additionally, Fig. 17 shows the eye diagram obtained with a mean percentage of compensation of 78% and zero post-compensation in the case of the comparison system (Fig. 17a) and in the case of the system according to the invention (Fig. 17b).

As may be noted, with the system according to the invention comprising the modulation and dispersion device according to the invention, the aperture of the eye diagram is considerably better than that found with the comparison system. In other words, the pulses which would be broadened and distorted in the comparison system are compressed by the modulation and dispersion device of the system according to the invention so that the eye again becomes open to the receiver.

Finally, Fig. 18 shows a diagram of the level curves for penalty values of 0.5 dB (curve A), 1 dB (curve B), 2 dB (curve C) and 3 dB (curve D) which were obtained with a variation of the percentage of compensation provided by the conventional line compensators and of the depth of modulation $\alpha_M$ used in the modulation and dispersion device according to the invention. In this case, the group delay D was assumed to be equal to -200 ps$^2$ and the value of post-compensation was assumed to be equal to -400 ps$^2$.

As may be noted, by suitable selection of the value of $\alpha_M$ it is possible to widen the area contained by the various level curves, and more particularly that for a penalty of 0.5 dB, and consequently to increase the range of percentage of compensation of chromatic dispersion tolerated by the system when a penalty of less than 0.5 dB is to be obtained.

From time to time, depending on the parameters of the optical communication system in question, the person with average skill in the art will be capable of selecting, out of all the values of $\alpha_M$, and therefore of K, which satisfy the equation A < K*D < B (where A and B have the meanings shown above), the optimal value of $\alpha_M$ which can provide the desired percentage of compensation of chromatic dispersion tolerated by the system when a penalty of less than a desired value (typically equal to 0.5 dB) is to be obtained.

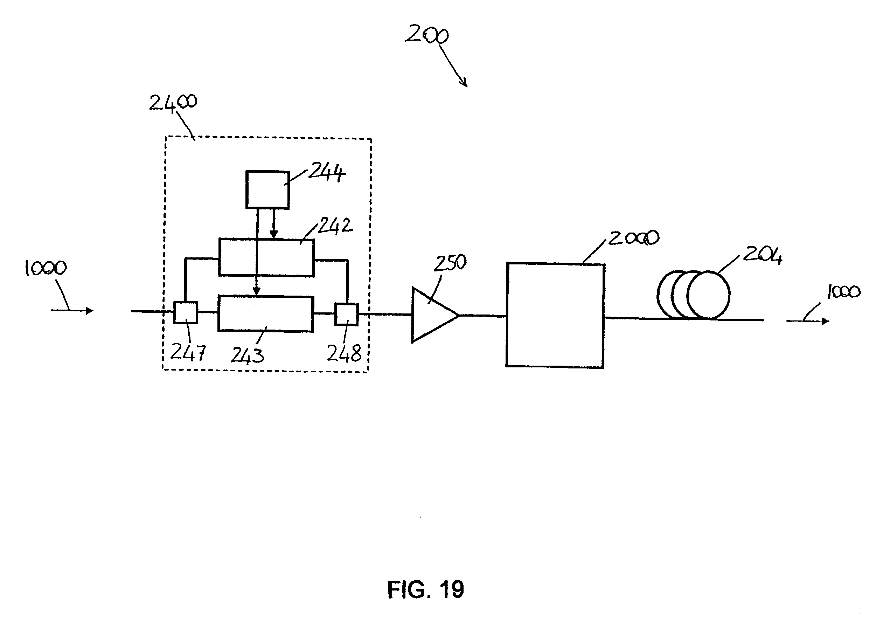

A modulation and dispersion device according to a further embodiment of the invention will now be described with reference to Fig. 19.

The modulation and dispersion device 200 comprises an amplitude modulation element 2400, a phase modulation element 2000 and a dispersion element 204. An optical amplifier 250 can advantageously be coupled between the amplitude modulation element 2400 and the phase modulation element 2000. However, optical amplifier 250 may be coupled at another position in the device, or it may even be omitted if signal attenuation by the device is low enough in relation to the requirements of an optical transmission system wherein the device is to be used.

In the embodiment illustrated in Fig. 19, the amplitude modulation element 2400 comprises a first amplitude modulator 242 and a second amplitude modulator 243, a first polarization beam splitter (PBS) 247, a second PBS 248 and an electronic driver device 244.

The amplitude modulators 242, 243 are typically conventional devices consisting, for example, of a Mach-Zehnder interferometer waveguide structure on a LiNbO$_3$ substrate associated with electrodes.

The said LiNbO$_3$ amplitude modulators 242, 243 are sensitive to the polarization of the optical signal at their input; in other words, they modulate the two orthogonal components of the polarization state of the digital optical signal 1000 in different ways.

At the input of the amplitude modulation element 2400 the PBS 247 separates the two orthogonal polarization components of the digital optical signal 1000, of which one component is modulated by the amplitude modulator 242 and the other is modulated by the amplitude modulator 243. At the output of the two amplitude modulators 242, 243, the said two orthogonal polarization components are recombined by the second PBS 248 and sent to the phase modulation element 2000 via optical amplifier 250.

The PBS 247, 248 are conventional devices, preferably of the optical fibre, planar waveguide or micro-optic type.

In another embodiment (not illustrated), the amplitude modulation element 2400 consists of a single amplitude modulator which is not sensitive to the polarization of the incident optical signal. Since it is not sensitive to the polarization of the incident optical signal, this embodiment does not require two amplitude modulators and/or elements for separating and combining its two orthogonal polarization components (such as the PBS in Fig. 19).

By controlling the potential difference V applied to the electrodes associated with the amplitude modulator 242, 243, an amplitude variation (decrease) of the digital optical signal 1000 equal to

$$\alpha_A = \sin^2 (\pi \beta_A / 2)$$

is obtained, where $\beta_A$ is defined for $|V - V_Q| \le V_\pi$ as:

$$\beta_A = \frac{|V - V_Q|}{V_\pi}$$

and where $V_Q$ is the potential difference that must be applied to the modulator to achieve a maximum transmission condition and $V_\pi$ is the potential delta from $V_Q$ which must be applied to the modulator to shift the modulator transmission from a maximum to a minimum value.

For example, if a voltage V(t) is applied which varies periodically in time above (or below) $V_Q$, it is possible to obtain a predetermined periodic variation in time $\alpha_A(t)$ of the amplitude variation $\alpha_A$. In this case, the maximum amplitude variation which can be obtained is conventionally defined as the amplitude modulation depth $\alpha_{AM}$:

$$\alpha_{AM} = \sin^2 \left( \frac{\pi}{2} \frac{|V - V_Q|_{max}}{V_\pi} \right)$$

where $|V-V_Q|_{max}$ is the maximum absolute value potential delta with respect to $V_Q$ that is applied to the electrodes of the amplitude modulator.

The electronic driver device 244 is a conventional device capable of driving the amplitude modulators 242, 243 under the control of the clock recovery 23 (Fig. 1). More particularly, the electronic device 244 applies a potential difference V(t) to the said electrodes in such a way that the amplitude modulators 242, 243 carry out an amplitude modulation of the digital optical signal 1000 characterized, according to the present invention, by

> 1) a modulation frequency selected in accordance with the bit rate $f_c$ determined by the clock recovery 23,
>
> 2) a periodic variation in time (time envelope of the amplitude $\alpha_A(t)$) synchronized with a predetermined point within the time slot and approximately symmetrical with respect to the said predetermined point (the maximum, or minimum, of the said variation in time is synchronized with respect to the said predetermined point).

Typically, the variation in time of the amplitude modulation is synchronized with the average central position of the time slot, determined by the clock recovery 23, and is approximately symmetrical with respect to this position.

Advantageously, an amplitude modulation depth $\alpha_{AM}$ of said amplitude modulation is greater than 80%. Preferably said amplitude modulation depth $\alpha_{AM}$ is greater than 90%.

A phase modulation element 2000 is coupled at the output of the amplitude modulation element 2400.

A dispersion element 204 is coupled to the output of the phase modulation element 2000.

The characteristics of phase modulation element 2000, of its phase modulation and of the dispersion element 204 are the same as those described in detail in relation to the first embodiment of a modulation and dispersion device according to the invention. Reference should therefore be made to the above text for details of these.

The relative position of the phase modulation and amplitude modulation elements can be exchanged. Accordingly, an alternative embodiment of the modulation and dispersion device 200 (not shown) comprises a phase modulation element 2000 with its output coupled to the input of an amplitude modulation element 2400. A dispersion element 204 is coupled to the output of the amplitude modulation element 2400.

In both above embodiments, an optical amplifier 250, for example an erbium doped fiber amplifier or a semiconductor optical amplifier can be associated with the device, e.g., coupled between the amplitude modulation element 2400 and the phase modulation element 2000, or at another position, to compensate for the attenuation of the device.

A further series of measurements was carried out to evaluate the effect of PMD on the performance of an optical communication system according to the invention, comprising a modulation and dispersion device according to above described further embodiment of the invention, and on the performance of a comparison system having the same characteristics as the system according to the invention except for the fact that it does not comprise the said modulation and dispersion device.

These measurements were made on a digital optical signal in NRZ format.

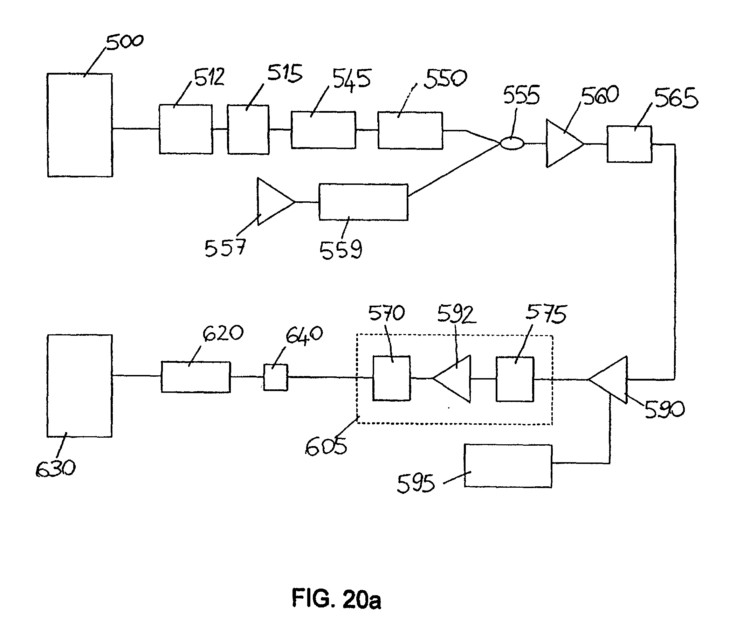

The experimental set-up (shown in Fig. 20a) comprised a pattern generator 500, an electro optical converter 512, a wavelength adapter 515, a polarization scrambler 545, a PMD emulator 550, an optical coupler 555, a noise generator 557, a first variable attenuator 559, a first optical amplifier 560, an optical filter 565, a second optical amplifier 590, an optical spectrum analyzer 595, a signal compensator 605, a second variable attenuator 640, a receiver 620 and an error detector 630.

Additionally, the signal compensator 605 consisted of a synchronous amplitude modulation device 575, an optical amplifier 592 and a PMD compensator 570.

The pattern generator 500 was a "Pulse Pattern Generator" made by Anritzu, model MP1763B.

The electro optical converter 512 was a DFB laser externally modulated with a $LiNbO_3$ amplitude modulator produced by the applicant.

The wavelength adapter was model WCM-10G produced by the applicant.

The polarization scrambler 545 was a device made by Hewlett Packard, model HP11896A.

The PMD emulator was a "PMD Emulator" made by JDS, model PE4.

The optical amplifiers 560, 590, 592 were 14 dBm devices produced by the applicant and marketed under the name of OLA/E - MW.

Noise generator 557 was an ASE source including a pumped erbium doped fiber.

The two variable attenuators 559, 640 were conventional optical devices produced and marketed by E-TEK Dynamics Inc.

The optical filter 565 was a micro-optics bandpass filter, namely an "interferential tunable filter" made by JDS, with a bandwidth of 1.3 nm.

The receiver 620 was a Nortel PIN photodiode with a band of 10 GHz.

The error detector 630 was an "Error Detector" made by Anritzu, model MP1764A.

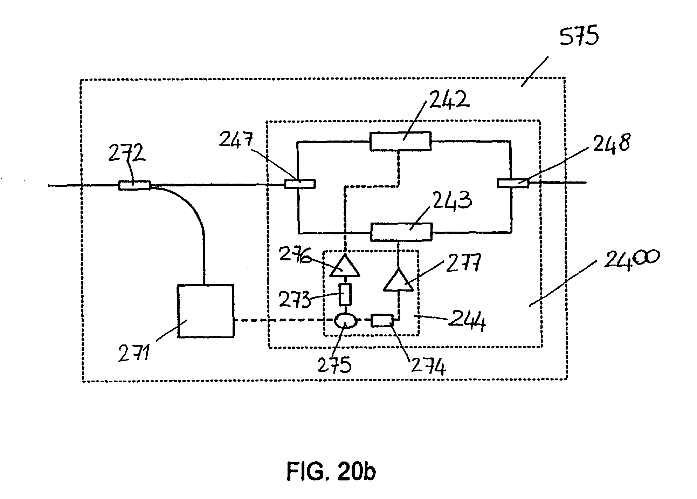

As shown in Fig. 20b, the synchronous amplitude modulation device 575 consisted of an optical splitter 272, a clock recovery 271 and an amplitude modulation element 2400 according to the invention.

The amplitude modulation element 2400 comprised a first 242 and a second 243 amplitude modulator, a first 247 and a second 248 polarization beam splitter (PBS) and an electronic driver device 244 comprising a first 273 and a second 274 electrical phase shifter, an electrical power splitter 275, and a first 276 and a second 277 electrical amplifier.

The optical splitter 272 was a conventional device made by E-TEK Dynamics Inc., capable of sending approximately 5% of the optical power to the input of the clock recovery 271 and approximately 95% to the two amplitude modulators 242, 243.

The clock recovery 271 consisted of a PIN photodiode with a bandwidth of 10 GHz made by Nortel, a limiting amplifier made by Multilink and a 10 GHz clock recovery device made by Veritech.

The electrical phase shifters 273, 274 were 0-18 GHz Macom FSC devices.

The electrical amplifiers 276, 277 were radio-frequency amplifiers made by Era Technology Ltd.

The electrical power splitter 275 was a 6 dB electrical radio-frequency splitter made by Suhner, model 4901.19.A, operating at 0-12 GHz.

The two amplitude modulators 242, 243 were LiNbO$_3$ devices produced by the applicant.

The two PBS 247 and 248 were conventional microoptics devices.

The PMD compensator 570 was as described above in relation to a second series of measurements with a first embodiment of the modulation and dispersion device according to the invention. However, in the present further series of experiments the dispersion element 204 consisted of a section of single-mode optical fibre of the step-index type produced by FOS and having a length of approximately 9 km.

The pattern generator 500 was used to drive the electro optical converter 512 so that it supplied a signal modulated in accordance with the digital information to be transmitted. The bit rate used was 10 GHz.

The wavelength adapter 515 converted the modulated signal into a NRZ modulation signal at a wavelength of 1555 nm.

Thus a digital optical signal in NRZ format was sent to the input of the polarization scrambler 545.

In order to allow for the PMD introduced by an optical fibre transmission line into the digital optical signal, the two fundamental polarization modes of the incoming bits were delayed by a time $\Delta\tau$ by means the PMD emulator 550. In order to verify the capacity of the modulation and dispersion device according to the invention to compensate different values of PMD, the said two fundamental polarization modes were delayed by a time $\Delta\tau$ which was varied from time to time.

A noise signal generated by noise generator 557 and attenuated by attenuator 559 was coupled by means of coupler 555 with the output of PMD emulator 550, to simulate the effect of ASE noise in an optical transmission line with concatenated amplifiers. By varying the attenuation of the variable attenuator 559 it was possible to vary the signal/noise ratio for the optical signal.

The power of the digital optical signal with PMD and ASE noise was amplified by the optical amplifier 560.

The power of the optical signal was filtered by the optical filter 565 (in such a way as to eliminate much of the ASE at a wavelength different from the signal wavelength), and then amplified again by the optical amplifier 590. A small fraction of the optical signal in amplifier 590 was coupled to optical spectrum analyzer 595, that was used to measure the optical signal/noise ratio (OSNR).

The amplified optical signal was split by splitter 272 of the synchronous amplitude modulation device 575. Part of the signal(approximately 5%) was sent to the clock recovery 271 and part (approximately 95%) was sent to the two amplitude modulators 242, 243 via PBS 247.

The clock recovery 271 recovered, from the optical signal at its input, the bit rate and the synchronization with the average central position of the time slot of the incoming bits.

Additionally, the two phase shifters 273, 274 made it possible to maintain synchronization with the said average central position of the time slot, recovered by the clock recovery 23.

The two amplitude modulators 242, 243 modulated the bits at their input by an amplitude modulation having

- a modulation frequency of 10 GHz,
- a sinusoidal periodic variation in time having its maximum transmission peaks synchronized with the peaks of intensity of the optical pulses; and
- an amplitude modulation depth of $\alpha_{AM}$=100%.

The signal was then synchronously phase modulated by PMD compensator 570, as previously described in relation to a second series of measurements with a first embodiment of the modulation and dispersion device according to the invention.

The digital optical signal, phase modulated in this way, was then propagated along the optical fibre 204 which had a dispersion value $\beta_2$ = -21 ps$^2$/km (anomalous dispersion), resulting in a group delay D $\cong$ $\beta_2$*L $\cong$ -T$^2$ $\cong$ -190 ps$^2$.

The power level of the optical signal leaving the optical fibre 204 was adjusted by means of the variable attenuator 640, so as to obtain an optimal optical power of -3.5 dBm at the input of the receiver 620.

The optical signal was thus received by the receiver 620, and the error detector 630 was used to determine the probability of error (Bit Error Rate, BER) with a variation of the optical signal-to-noise ratio at the input of the receiver 620 and a variation of the delay $\Delta\tau$ introduced between the two orthogonal polarization components of the bits.

In order to compare the performance of the optical communication system according to the invention, having the modulation and dispersion device according to the invention for compensating the PMD, with those of the comparison optical communication system without the said modulation and dispersion device, the measurements were made firstly with the set-up in Fig. 20a, and secondly by removing all the elements of the signal compensator 605.

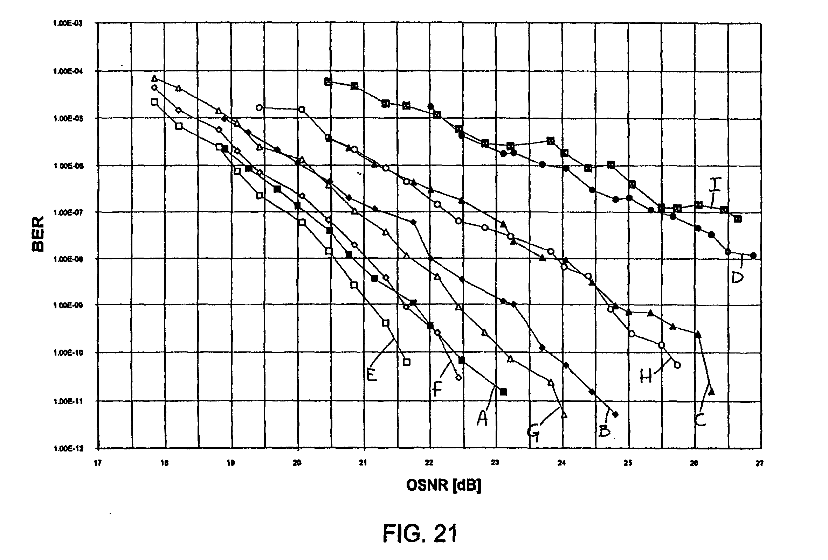

Fig. 21 shows the values of BER which were obtained with a variation of the signal-to-noise ratio OSNR (expressed in dB) for a delay $\Delta\tau$ of 0 ps (curve A), 30 ps (curve B), 40 ps (curve C) and 50 ps (curve D), with the comparison system, and for a delay $\Delta\tau$ of 0 ps (curve E), 30 ps (curve F), 40 ps (curve G), 50 ps (curve H) and 60 ps (curve I), with the system according to the invention.

As may be seen in Fig. 21, for a $\Delta\tau$ of 40 ps, the values of BER obtained with the system according to the invention (curve G) are considerably better (for the same signal-to-noise ratio) than those obtained with the comparison system (curve C). Moreover, with the system according to the invention the values of BER become very close to those which would be obtained in the absence of PMD. In fact, curve G indicates a penalty of less than about 1 dB with the system according to the invention (where penalty is defined as the increase in OSNR that is required to achieve a same BER as the comparison system for $\Delta\tau$=0), while curve C indicates a penalty of about 3 dB for the comparison system.

The modulation and dispersion device according to the invention is therefore capable of providing practically complete compensation of the said time delay $\Delta\tau$ of 40 ps introduced by PMD into the two fundamental polarization modes of the digital optical signal.

While almost no penalty is achieved with the system according to the invention for a $\Delta\tau$ of 30 ps (curve F), even for a $\Delta\tau$ of 50 ps the values of BER obtained with the system according to the invention are considerably better than those obtained with the comparison system, the penalty being decreased by more than 2 dB.

The bad performance for $\Delta\tau$ of 60 ps is explained by the fact that the tail of the optical pulses ended up in the adjacent time slots (total time slot duration: 100 ps) before reaching the signal compensator 605.

The experimental results with the present embodiment of the invention further indicate that for a given OSNR value the BER value remains substantially constant (within 1 dB) for $\Delta\tau$ up to at least 40 ps.

With respect to the previously described embodiment of the modulation and dispersion device 200 according to a the invention (including a phase modulation element and a dispersion element), the present embodiment, also including an synchronous amplitude modulation element has the further advantage of providing, in case of NRZ transmission, a constant and low penalty value substantially independent from the value of $\Delta\tau$, i.e., substantially independent from the degree of time broadening that affects the signal.

Further computer simulations were carried out by the inventors in order to verify the performance of the optical communication system according to the invention, comprising the modulation and dispersion device of the embodiment described with reference to Fig. 19. The adopted simulation technique was analogous to that described above with reference the previous embodiments of the modulation and dispersion device (Fig. 2-4), considering NRZ signal transmission and further keeping into account in the simulation the amplitude modulation provided by the amplitude modulation element 2400.

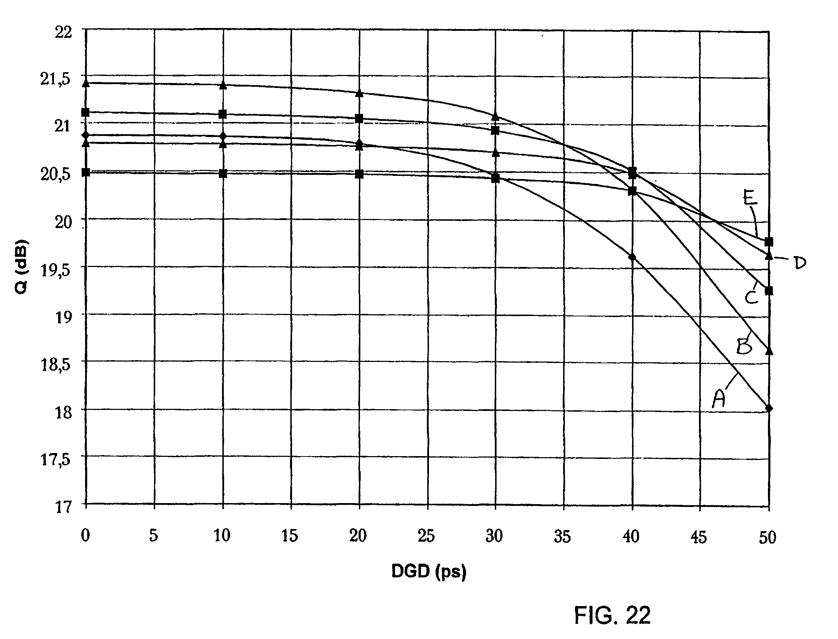

Fig. 22 shows, as a result of the simulations, the Q-factor versus the Differential Group Delay (DGD) for the comparison system with no signal compensation (curve A) and for the invention system with amplitude modulation depths of $\alpha_{AM}$=70% (curve B), $\alpha_{AM}$=80% (curve C), $\alpha_{AM}$=90% (curve D) and $\alpha_{AM}$=100% (curve E).

The simulation results show that in the comparison system (absence of signal compensation) the Q-factor is severely degraded for DGD values greater than 30 ps, while in the invention system, in particular for amplitude modulation depths greater than 80%, a substantially constant Q-factor is achieved, independent from the level of DGD.

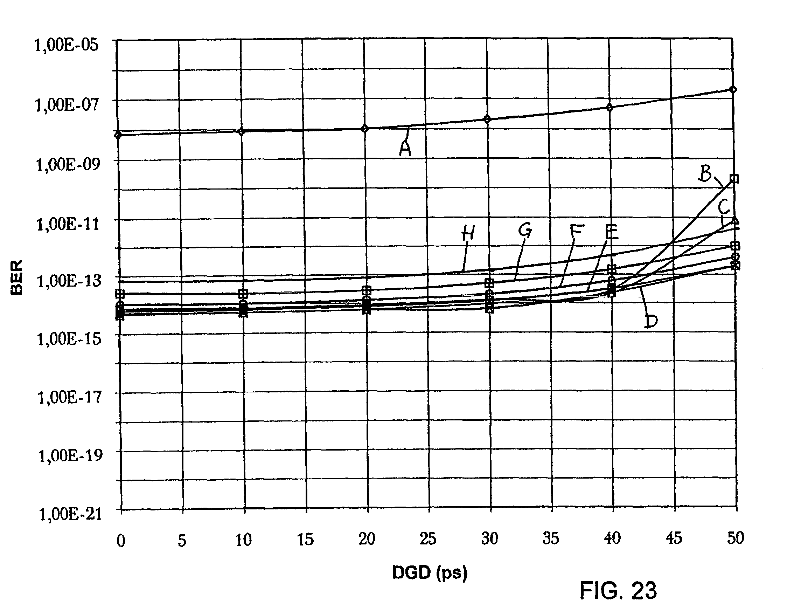

Fig. 23 shows other simulation results, namely a graph of BER versus Differential Group Delay (DGD) for the comparison system for the comparison system with no signal compensation (curve A) and for the invention system with an amplitude modulation depth of $\alpha_{AM}$=100%, a group delay D=-200 ps$^2$ and various values of K (maximum amplitude of the periodic phase modulation): curve B corresponds to KD=-0.44, curve C to KD=-0.55, curve D to KD=-0.66, curve E to KD=-0.78, curve F to KD=-0.88, curve G to KD=-1.01 and curve H corresponds to KD=-1.1.

The results confirm a significant improvement in BER associated with NRZ signal broadening compensation achieved by the modulation and dispersion device of the embodiment described with reference to Fig. 19, over the whole range of tested parameters. In particular, for KD included in a range of about -0.9 to -0.4, a BER value is achieved that is substantially independent from DGD up to a DGD of about 40 ps.

The applicant has determined that the amount of dispersion compensation to be provided by the conventional line compensators in a system according to the invention for transmitting NRZ signals, and adopting a modulation and dispersion device according to the further embodiment of the invention described with reference to fig. 19, is preferably between 85% and 110%, more preferably between 90% and 105%, even more preferably between 95% and 100%.

**Claims**

**1.** An optical communication system (100) comprising:

- a first apparatus (10) for transmitting at least one digital optical signal (1000) comprising a flow of bits having a predetermined bit rate $f_c$ and a predetermined time slot with a duration $1/f_c$;

- an optical transmission line (30), optically connected to the said first apparatus (10), for the propagation of the said digital optical signal (1000);
- a second apparatus (20), optically connected to the said optical transmission line (30), to receive the said digital optical signal (1000), the said second apparatus (20) comprising a receiving device (40) and a modulation and dispersion device (200), **characterized in that** the said modulation and dispersion device (200) comprises:

    i. a modulation element (2000) for modulating the phase of the said digital optical signal (1000) by a modulation having

      a) a modulation frequency predetermined in accordance with the said bit rate $f_c$ of the said digital optical signal (1000),
      b) a periodic variation in time which is approximately symmetrical with respect to a predetermined point within the said time slot whose duration is $1/f_c$, and
      c) a maximum amplitude K of the said periodic variation;

    ii. a chromatic dispersion element (204), optically connected to the said modulation element (2000), and capable of introducing a group delay D into each bit of the phase modulated digital optical signal (1000), the said chromatic dispersion element (204) providing a dispersion of the anomalous type, when the said periodic variation in time has a positive modulation amplitude, and a dispersion of the normal type when the said periodic variation in time has a negative modulation amplitude.

2. An optical communication system (100) according to Claim 1, **characterized in that** the product of the said maximum amplitude K and the said group delay D is in the range from A to B, where A is equal to -0.5*(1-X) and B is equal to -0.5*(1+Y), and X is less than or equal to 0.2 and Y is less than or equal to 2.

3. An optical communication system (100) according to Claim 1 or 2, **characterized in that** the said bits are in RZ format.

4. An optical communication system (100) according to Claim 1 or 2, **characterized in that** the said bits are in NRZ format.

5. An optical communication system (100) according to any of Claims 1 to 4, **characterized in that** the said second apparatus (20) also comprises an optical beam splitter (22) capable of dividing the intensity of the said digital optical signal (1000) in such a way as to supply a first fraction of intensity to the said modulation and dispersion device (200) and a second fraction of intensity to a clock recovery device (23).

6. An optical communication system (100) according to Claim 5, **characterized in that** the said clock recovery device (23) is actively connected to the said modulation element (2000) of the said modulation and dispersion device (200), and is capable of determining the bit rate $f_c$ of the said digital optical signal (1000) arriving from the said optical beam splitter and the synchronization with the average central position of the time slot of the bits of the said digital optical signal (1000).

7. An optical communication system (100) according to. any of the preceding Claims 1 to 6, **characterized in that** the said periodic variation in time of the said phase modulation is approximately parabolic.

8. An optical communication system (100) according to any of the preceding Claims 1 to 7, **characterized in that** the said modulation element (2000) comprises at least a phase modulator (202) and a driver device (24) for the said phase modulator (202), the said driver device (24) being actively connected to the said clock recovery device (23).

9. An optical communication system (100) according to any of the preceding Claims 1 to 8, **characterized in that** the said chromatic dispersion element (204) comprises a suitable section of optical. fibre.

10. A modulation and dispersion device (200) for processing an optical signal (1000),
**characterized in that** the said modulation and dispersion device comprises

- a modulation element (2000) for modulating the phase or the said optical signal (1000) by a modulation having

    a) a predetermined modulation frequency,
    b) a predetermined periodic variation in time, and
    c) a maximum amplitude K of the said periodic variation;

- a chromatic dispersion element (204), connected optically to the said modulation element (2000), and capable of introducing a group delay D into the said optical signal (1000),

i. the product of the said, maximum amplitude K and the said group delay D being in the range from A to B, where A is equal to -0.5*(1-X) and B is equal to -0.5*(1+Y), and X is less than or equal to 0.2 and Y is less than or equal to 2; and

ii.the said chromatic dispersion element (204) providing a dispersion of the anomalous type, when the said periodic variation in time has a positive modulation amplitude, and a dispersion of the normal type when the said periodic variation in time has a negative modulation amplitude.

**11.** A modulation and dispersion device (200) according to Claim 10, **characterized in that** the said optical signal (1000) is a digital optical signal comprising a flow of bits having a predetermined bit rate $f_c$ and a predetermined time slot with a duration $1/f_c$

**12.** A modulation and dispersion device (200) according to Claim 11, **characterized in that** the said modulation frequency is selected in accordance with the said bit rate $f_c$.

**13.** A modulation and dispersion device (200) according to Claim 11 or 12, **characterized in that** the said periodic variation in time is approximately symmetrical with respect to a predetermined point within the said time slot with a duration of $1/f_c$.

**14.** A method for processing the bits of a digital optical signal comprising a flow of bits having a predetermined bit rate $f_c$ and a predetermined time slot having a duration $1/f_c$, the said method comprising the step of

a) modulating the phase of the said digital optical signal,
**characterized in that** said phase modulation has

a1) a modulation frequency predetermined in accordance with the said bit rate $f_c$ of the said digital optical signal,
a2) a periodic variation in time which is approximately symmetrical with respect to a predetermined point within the said time slot having the duration $1/f_c$, and
a3) a maximum amplitude K of the said periodic variation;

said method further comprising the step of
b) causing, in a suitable chromatic dispersion element, a group delay D of each bit of the said phase modulated digital optical signal, the said chromatic dispersion element providing a dispersion of the anomalous type, when the said periodic variation in time has a positive modulation amplitude, and a dispersion of the normal type when the said periodic variation in time has a negative modulation amplitude.

**15.** A method according to Claim 14, **characterized in, that** the said processing consists in the compression of the bits of the said digital optical signal.

**16.** A method according to Claim 14, **characterized in that** the said processing consists in the retiming of the bits of the said digital optical signal.

**17.** A method according to Claim 14, **characterized in that** the said processing consists in the compression and retiming of the bits of the said digital optical signal.

**18.** A method according to any of the preceding Claims 14 to 17, **characterized in that** the product of the said maximum amplitude K and the said group delay D is in the range from A to B, where A is equal to -0.5*(1-x) and B is equal to 0.5*(1+Y), and X is less than or equal to 0.2 and Y is less than or equal to 2.

**19.** An optical communication system (100) comprising:

- a first apparatus (10) for transmitting at least one digital optical signal (1000) comprising a flow of bits having a predetermined bit rate $f_c$ and a predetermined time slot with a duration $1/f_c$;
- an optical transmission line (30), optically connected to the said first apparatus (10), for the propagation of the said digital optical signal (1000);
- a second apparatus (20), optically connected to the said optical transmission line (30), to receive the said digital optical signal (1000), the said second apparatus (20) comprising a receiving device (40) and a modulation and dispersion device (200), **characterized in that** the said modulation and dispersion device (200) comprises;

i. a modulation element (2400) for modulating the amplitude of the said optical signal (1000) by a modulation having

a1) a modulation frequency predetermined in accordance with the said bit rate $f_c$ of the said digital optical signal (1000),
b1) an amplitude periodic variation in time which is approximately symmetrical with respect to a predetermined point within the said time slot whose duration is $1/f_c$, and
c1) a maximum amplitude $\alpha_{AM}$ of the said amplitude periodic variation;

ii. a modulation element (2000) for modulating the phase of the said digital optical signal (1000) by a modulation having

a2) a modulation frequency predetermined in accordance with the said bit rate $f_c$ of the said digital optical signal (1000),
b2) a phase periodic variation in time which is approximately symmetrical with respect to a predetermined point within the said time slot whose duration is $1/f_c$, and
c2) a maximum amplitude K of the said phase periodic variation;

iii. a chromatic dispersion element (204), optically connected to the said modulation elements (2000; 2400), and capable of introducing a group delay D into each bit of the modulated digital optical signal (1000), the said chromatic dispersion element (204) providing a dispersion of the anomalous type, when the said phase periodic variation in time has a positive modulation amplitude, and a dispersion of the normal type when the said phase periodic variation in time has a negative modulation amplitude;

- said amplitude and phase modulation elements (2400, 2000) being optically connected in cascade.

20. An optical communication, system (100) according to Claim 19, **characterized in that** the product of the said maximum amplitude K and the said group delay D is in the range from A to B, where A is equal to -0.5*(1-X) and 8 is equal to -0.5*(1+Y), and X is less than or equal to 0.2 and Y is less than or equal to 2.

21. An optical communication system (100) according to Claim 19 or 20, **characterized in that** the said bits are in RZ format.

22. An optical communication system (100) according to Claim 19 or 20, **characterized in that** the said bits are in NRZ format.

23. A modulation and dispersion device (200) for processing an optical signal (1000), **characterized in that** the said modulation and dis-

person device comprises

- a modulation element (2400) for modulating the amplitude of the said optical signal (1000) by a modulation having

a) a predetermined modulation frequency,
b) a predetermined amplitude periodic variation in time, and
c) a maximum amplitude $\alpha_{AM}$ of the said amplitude periodic variation;

- a modulation element (2000) for modulating the phase of the said optical signal (1000) by a modulation having

a)said predetermined modulation frequency,
b) a predetermined phase periodic variation in time, and
c) a maximum amplitude K of the said phase periodic variation;

- a chromatic dispersion element (204), connected optically to the said modulation elements (2000; 2400), and capable of introducing a group delay D into the said modulated optical signal (1000),

i. the product of the said maximum amplitude K and the said group delay D being in the range from A to B, where A is equal to -0.5*(1-X) and B is equal to -0.5*(1+Y), and X is less than or equal to 0.2 and Y is less than or equal to 2; and
ii.the said chromatic dispersion element (204) providing a dispersion of the anomalous type, when the said phase periodic variation in time has a positive modulation amplitude, and a dispersion of the normal type when the said phase periodic variation in time has a negative modulation amplitude,

- said amplitude and phase modulation elements (2400, 2000) being optically connected in cascade.

24. A method for processing the bits of a digital optical signal comprising a flow of bits having a predetermined bit rate $f_c$ and a predetermined time slot having a duration $1/f_c$, **characterized in that** the said method comprises the steps of

a) modulating the amplitude of the said digital optical signal by a modulation having

a1) a modulation frequency predetermined in accordance with the said bit rate $f_c$ of the said digital optical signal,

a2) an amplitude periodic variation in time which is approximately symmetrical with respect to a predetermined point within the said time slot having the duration $1/f_c$, and

a3) a maximum amplitude $\alpha_M$ of the said amplitude periodic variation;

b) modulating the phase of the said digital optical signal by a modulation having

b1) a modulation frequency predetermined in accordance with the said bit rate $f_c$ of the said digital optical signal,

b2) a phase periodic variation in time which is approximately symmetrical with respect to a predetermined point within the said time slot having the duration $1/f_c$, and

b3) a maximum amplitude K of the said phase periodic variation;

c) causing, in a suitable chromatic dispersion element, a group delay D of each bit of the said modulated digital optical signal, the said chromatic dispersion element providing a dispersion of the anomalous type, when the said phase periodic variation in time has a positive modulation amplitude, and a dispersion of the normal type when the said phase periodic variation in time has a negative modulation amplitude,

- said amplitude modulation and said phase modulation being performed in series.

**Patentansprüche**

1. Optisches Kommunikationssystem (100), umfassend:

- eine erste Vorrichtung (10) zur Übertragung mindestens eines digitalen optischen Signals (1000), welches einen Bitstrom umfasst, der eine vorbestimmte Bitrate $f_c$ und einen vorbestimmten Zeitschlitz mit einer Dauer $1/f_c$ hat;

- eine optische Übertragungsleitung (30), die mit der ersten Vorrichtung (10) optisch verbunden ist, für die Ausbreitung des digitalen optischen Signals (1000);

- eine zweite Vorrichtung (20), die mit der optischen Übertragungsleitung (30) optisch verbunden ist, um das digitale optische Signal (1000) zu empfangen, wobei die zweite Vorrichtung (20) eine Empfangsvorrichtung (40) und eine Modulations- und Dispersionsvorrichtung (200) umfasst, **dadurch gekennzeichnet, dass** die Modulations- und Dispersionsvorrichtung (200) umfasst:

i. ein Modulationselement (2000) zum Modulieren der Phase des digitalen optischen Signals (1000) durch eine Modulation mit

a) einer Modulationsfrequenz, die in Übereinstimmung mit der Bitrate $f_c$ des digitalen optischen Signals (1000) vorbestimmt ist,

b) einer periodischen Variation in der Zeit, welche ungefähr symmetrisch ist bezüglich eines vorbestimmten Punkts innerhalb des Zeitschlitzes, dessen Dauer $1/f_c$ ist, und

c) einer Maximalamplitude K der periodischen Variation;

ii. ein Element (204) der chromatischen Dispersion, welches optisch mit dem Modulationselement (2000) verbunden ist, und in der Lage ist eine Gruppenverzögerung D in jedes Bit des phasenmodulierten digitalen optischen Signals (1000) einzufügen, wobei das Element (204) der chromatischen Dispersion eine anormale Dispersion bereitstellt, wenn die periodische Variation in der Zeit eine positive Modulationsamplitude hat, und eine normale Dispersion, wenn die periodische Variation in der Zeit eine negative Modulationsamplitude hat.

2. Optisches Kommunikationssystem (100) nach Anspruch 1, **dadurch gekennzeichnet, dass** das Produkt der Maximalamplitude K und der Gruppenverzögerung D im Bereich von A bis B ist, wobei A gleich -0.5*(1-X) ist, und B gleich -0.5*(1+Y) ist, und X kleiner oder gleich 0.2 und Y kleiner oder gleich 2 ist.

3. Optisches Kommunikationssystem (100) nach Anspruch 1 oder 2, **dadurch gekennzeichnet, dass** die Bits im RZ-Format sind.

4. Optisches Kommunikationssystem (100) nach Anspruch 1 oder 2, **dadurch gekennzeichnet, dass** die Bits im NRZ-Format sind.

5. Optisches Kommunikationssystem (100) nach einem der Ansprüche 1 bis 4, **dadurch gekennzeichnet, dass** die zweite Vorrichtung (20) auch einen optischen Strahlteiler (22) umfasst, der in der Lage ist die Intensität des digitalen optischen Signals (1000, so zu teilen, dass ein erster Bruchteil der Intensität an die Modulations- und Dispersionsvorrichtung (200) geliefert wird, und ein zweiter Bruchteil der Intensität an eine Taktwiedergewinnungsvorrichtung (23).

**6.** Optisches Kommunikationssystem (100) nach Anspruch 5, **dadurch gekennzeichnet, dass** die Taktwiedergewinnungsvorrichtung (23) aktiv mit dem Modulationselement (2000) der Modulations- und Dispersionsvorrichtung (200) verbunden ist, und in der Lage ist, die Bitrate $f_c$ des digitalen optischen Signals (1000) zu bestimmen, das aus dem optischen Strahlteiler ankommt, und die Synchronisation mit der mittleren Zentralposition des Zeitschlitzes der Bits des digitalen optischen Signals (1000).

**7.** Optisches Kommunikationssystem (100) nach einem der vorangehenden Ansprüche 1 bis 6, **dadurch gekennzeichnet, dass** die periodische Variation in der Zeit der Phasenmodulation ungefähr parabolisch ist.

**8.** Optisches Kommunikationssystem (100) nach einem der. vorangehenden Ansprüche 1 bis 7, **dadurch gekennzeichnet, dass** das Modulationselement (2000) mindestens einen Phasenmodulator (202) und eine Ansteuervorrichtung (24) für den Phasenmodulator (202) umfasst, wobei die Ansteuervorrichtung (24) mit der Taktwiedergewinnungsvorrichtung (23) aktiv verbunden ist.

**9.** Optisches Kommunikationssystem (100) nach einem der vorangehenden Ansprüche 1 bis 8, **dadurch gekennzeichnet, dass** das Element (204) der chromatischen Dispersion einen geeigneten optischen Faserabschnitt umfasst.

**10.** Modulations- und Dispersionsvorrichtung (200) zur Verarbeitung eines optischen Signals (1000), **dadurch gekennzeichnet, dass** die Modulations- und Dispersionsvorrichtung umfasst:

- ein Modulationselement (2000) zum Modulieren der Phase des optischen Signals (1000) durch eine Modulation mit

  a) einer vorbestimmten Modulationsfrequenz,

  b) einer vorbestimmten periodischen Variation in der Zeit, und

  c) einer Maximalamplitude K der periodischen Variation;

- ein Element (204) der chromatischen Dispersion, welches optisch mit dem Modulationselement (2000) verbunden ist, und in der Lage ist eine Gruppenverzögerung D in das optische Signal (1000) einzufügen, wobei

  i. das Produkt der Maximalamplitude K und der Gruppenverzögerung D im Bereich von A bis B liegt, wobei A gleich -0.5*(1-X) und B gleich -0.5*(1+Y) ist, und X kleiner oder gleich 0.2 und Y kleiner oder gleich 2 ist; und

  ii. das Element (204) chromatischer Dispersion eine anormale Dispersion bereitstellt, wenn die periodische Variation in der Zeit eine positive Modulationsamplitude hat, und eine normale Dispersion, wenn die periodische Variation in der Zeit eine negative Modulationsamplitude hat.

**11.** Modulations- und Dispersionsvorrichtung (200) nach Anspruch 10, **dadurch gekennzeichnet, dass** das optische Signal (1000) ein digitales optisches Signal ist, welches einen Bitstrom umfasst, der eine vorbestimmte Bitrate $f_c$ und einen vorbestimmten Zeitschlitz mit einer Dauer $1/f_c$ hat.

**12.** Modulations- und Dispersionsvorrichtung (200) nach Anspruch 11, **dadurch gekennzeichnet, dass** die Modulationsfrequenz in Übereinstimmung mit der Bitrate $f_c$ gewählt ist.

**13.** Modulations- und Dispersionsvorrichtung (200) nach Anspruch 11 oder 12, **dadurch gekennzeichnet, dass** die periodische Variation in der Zeit ungefähr symmetrisch ist bezüglich eines vorbestimmten Punkts innerhalb des Zeitschlitzes mit einer Dauer von $1/f_c$.

**14.** Verfahren zur Verarbeitung der Bits eines digitalen optischen Signals, das einen Bitstrom umfasst, welcher eine vorbestimmte Bitrate $f_c$ und einen vorbestimmten Zeitschlitz mit einer Dauer $1/f_c$ hat, wobei das Verfahren den Schritt umfasst:

  a) Modulieren der Phase des digitalen optischen Signals,
  **dadurch gekennzeichnet, dass** die Phasenmodulation

  a1) eine Modulationsfrequenz hat, die in Übereinstimmung mit der Bitrate $f_c$ des digitalen optischen Signals vorbestimmt ist,

  a2) eine periodische Variation in der Zeit hat, welche ungefähr symmetrisch ist bezüglich eines vorbestimmten Punkts innerhalb des Zeitschlitzes, der die Dauer $1/f_c$ hat, und

a3) eine Maximalamplitude K der periodischen Variation hat;

wobei das Verfahren weiterhin den Schritt umfasst:

b) Bewirken einer Gruppenverzögerung D jedes Bits des phasenmodulierten digitalen optischen Signals in einem geeigneten Element der chromatischen Dispersion, wobei das Element der chromatischen Dispersion eine anormale Dispersion bereitstellt, wenn die periodische Variation in der Zeit eine positive Modulationsamplitude hat, und eine normale Dispersion, wenn die periodische Variation in der Zeit eine negative Modulationsamplitude hat.

15. Verfahren nach Anspruch 14, **dadurch gekennzeichnet, dass** die Verarbeitung in der Kompression der Bits des digitalen optischen Signals besteht.

16. Verfahren nach Anspruch 14, **dadurch gekennzeichnet, dass** die Verarbeitung in der Neutaktung der Bits des digitalen optischen Signals besteht.

17. Verfahren nach Anspruch 14, **dadurch gekennzeichnet, dass** die Verarbeitung in der Kompression und Neutaktung der Bits des digitalen optischen Signals besteht.

18. Verfahren nach einem der vorangehenden Ansprüche 14 bis 17, **dadurch gekennzeichnet, dass** das Produkt der Maximalamplitude K und der Gruppenverzögerung D im Bereich von A bis B ist, wobei A gleich -0.5*(1-X) ist und B gleich -0.5*(1+Y) ist, und X kleiner oder gleich 0.2 und Y kleiner oder gleich 2 ist.

19. Optisches Kommunikationssystem (100) umfassend:

- eine erste Vorrichtung (10) zur Übertragung mindestens eines digitalen optischen Signals (1000), welches einen Bitstrom umfasst, der eine vorbestimmte Bitrate $f_c$ und einen vorbestimmten Zeitschlitz mit einer Dauer $1/f_c$ hat;

- eine optische Übertragungsleitung (30), die mit der ersten Vorrichtung (10) optisch verbunden ist, für : die Ausbreitung des digitalen optischen Signals (1000) ;

- eine zweite Vorrichtung (20), die mit der optischen Übertragungsleitung (30) optisch verbunden ist, um das digitale optische Signal (1000) zu empfangen, wobei die zweite Vorrichtung (20) eine Empfangsvorrichtung (40) und eine Modulations- und Dispersionsvorrichtung (200) umfasst, **dadurch gekennzeichnet, dass** die Modulations- und Dispersionsvorrichtung (200) umfasst:

i. ein Modulationselement (2400) zum Modulieren der Amplitude des optischen Signals (1000) durch eine Modulation mit

a1) einer Modulationsfrequenz, die in Übereinstimmung mit der Bitrate $f_c$ des digitalen optischen Signals (1000) bestimmt ist,

b1) einer amplitudenperiodischen Variation in der Zeit, welche ungefähr symmetrisch ist bezüglich eines vorbestimmten Punkts innerhalb des Zeitschlitzes, dessen Dauer 1/fc ist, und

c1) einer Maximalamplitude $\alpha_{AM}$ der amplitudenperiodischen Variation;

ii. ein Modulationselement (2000) zum Modulieren der Phase des digitalen optischen Signals (1000) durch eine Modulation mit

a2) einer Modulationsfrequenz, die in Übereinstimmung mit der Bitrate $f_c$ des digitalen optischen Signals (1000) vorbestimmt ist,

b2) einer phasenperiodischen Variation in der Zeit, welche ungefähr symmetrisch bezüglich ist eines vorbestimmten Punkts innerhalb des Zeitschlitzes, dessen Dauer $1/f_c$ ist, und

c2) einer Maximalamplitude K der phasenperiodischen Variation;

iii. ein Element (204) der chromatischen Dispersion, welches mit den Modulationselementen (2000; 2400) optisch verbunden ist, und in der Lage ist eine Gruppenverzögerung D in jedes Bit des digitalen optischen Signals (1000) einzufügen, wobei das chromatische Dispersionselement (204) eine anormale Dispersion bereitstellt, wenn die phasenperiodische Variation in der Zeit eine positive Modulationsamplitude hat, und eine normale Dispersion, wenn die phasenperiodische Variation in der Zeit eine negative Modulationsamplitude hat;

- wobei die Amplitudenmodulations- und Phasenmodulationselemente (2400, 2000) optisch in einer Kaskade geschaltet sind.

**20.** Optisches Kommunikationssystem (100) nach Anspruch 19, **dadurch gekennzeichnet, dass** das Produkt der Maximalamplitude K und der Gruppenverzögerung D im Bereich von A bis B ist, wobei A gleich -0.5*(1-X) ist und B gleich 0.5*(1+Y) ist, und X kleiner oder gleich 0.2 und Y kleiner oder gleich 2 ist.

**21.** Optisches Kommunikationssystem (100) nach Anspruch 19 oder 20, **dadurch gekennzeichnet, dass** die Bits im RZ-Format sind.

**22.** Optisches Kommunikationssystem (100) nach Anspruch oder 20, **dadurch gekennzeichnet, dass** die Bits im NRZ-Format sind.

**23.** Modulations- und Dispersionsvorrichtung (200) zur Verarbeitung eines optischen Signals (1000), **dadurch gekennzeichnet, dass** die Modulations- und Dispersionsvorrichtung umfasst:

- ein Modulationselement (2400) zum Modulieren der Amplitude des optischen Signals (1000) durch eine Modulation mit

  a) einer vorbestimmten Modulationsfrequenz,

  b) einer vorbestimmten amplitudenperiodischen Variation in der Zeit, und

  c) einer maximalen Amplitude $\alpha_{AM}$ der amplitudenperiodischen Variation,

- ein Modulationselement (2000) zum Modulieren der Phase des optischen Signals (1000) durch eine Modulation mit

  a) einer vorbestimmten Modulationsfrequenz,

  b) einer vorbestimmten phasenperiodischen Variation in der Zeit, und

  c) einer Maximalamplitude K der phasenperiodischen Variation,

- ein Element (204) der chromatischen Dispersion, das mit den Modulationselementen (2000; 2400) optisch verbunden ist, und in der Lage ist, eine Gruppenverzögerung D in das modulierte optische Signal (1000) einzufügen, wobei

  i. das Produkt der Maximalamplitude K und der Gruppenverzögerung D im Bereich von A bis B ist, wobei A gleich -0.5*(1-X) ist und B gleich -0.5*(1+Y) ist, und X kleiner oder gleich 0.2 und Y kleiner oder gleich 2 ist; und

  ii. das Element (204) der chromatischen Dispersion eine anormale Dispersion bereitstellt, wenn die phasenperiodische Variation in der Zeit eine positive Modulationsamplitude hat, und eine normale Dispersion, wenn die phasenperiodische Variation in der Zeit eine negative Modulationsamplitude hat,

- wobei die Amplitudenmodulations- und Phasenmodulationselemente (2400, 2000) optisch in einer Kaskade geschaltet sind.

**24.** Verfahren zur Verarbeitung der Bits eines digitalen optischen Signals, das einen Bitstrom umfasst, welcher eine vorbestimmte Bitrate $f_c$ und einen vorbestimmten Zeitschlitz mit einer Dauer $1/f_c$ hat, **dadurch gekennzeichnet, dass** das Verfahren die Schritte umfasst:

  a) Modulieren der Amplitude des digitalen optischen Signals durch eine Modulation mit

  a1) einer Modulationsfrequenz, die in Übereinstimmung mit der Bitrate $f_c$ des digitalen optischen Signals vorbestimmt ist,

  a2) einer amplitudenperiodischen Variation in der Zeit, welche ungefähr symmetrisch ist bezüglich eines vorbestimmten Punkts innerhalb des Zeitschlitzes mit der Dauer $1/f_c$, und

  a3) einer Maximalamplitude $\alpha_{AM}$ der amplitudenperiodischen Variation,

  b) Modulieren der Phase des digitalen optischen Signals durch eine Modulation mit

  b1) einer Modulationsfrequenz, die in Übereinstimmung mit der Bitrate $f_c$ des digitalen optischen Signals vorbestimmt ist,

  b2) einer phasenperiodischen Variation in der Zeit, welche ungefähr symmetrisch ist bezüglich eines vorbestimmten Punkts innerhalb des Zeitschlitzes mit der Dauer $1/f_c$, und

  b3) einer Maximalamplitude K der phasenperiodischen Variation,

c) Bewirken einer Gruppenverzögerung D jedes Bits des modulierten digitalen optischen Signals in einem geeigneten Element der chromatischen Dispersion, wobei das Element der chromatischen Dispersion eine anormale Dispersion bereitstellt, wenn die phasenperiodische Variation in der Zeit eine positive Modulationsamplitude hat, und eine normale Dispersion, wenn die phasenperiodische Variation in der Zeit eine negative Modulationsamplitude hat,

- wobei die Amplitudenmodulation und die Phasenmodulation in Reihe durchgeführt werden.

## Revendications

1. Système de communication optique (100) comprenant:

   - un premier dispositif (10) pour transmettre au moins un signal optique numérique (1000) comprenant une suite de bits ayant une cadence binaire prédéterminée $f_c$ et un créneau temporel prédéterminé d'une durée égale à $1/f_c$;
   - une ligne de transmission optique (30) connecté optiquement audit premier appareil (10) pour la propagation dudit signal optique numérique (1000);
   - un second dispositif (20) connecté optiquement à ladite ligne de transmission optique (10) pour recevoir ledit signal optique numérique (1000), ledit second dispositif (20) comprenant un dispositif de réception (40) et un dispositif de modulation et de dispersion (200),

   **caractérisé en ce que** ledit dispositif de modulation et de dispersion (200) comprend:

   i. un élément de modulation (2000) pour moduler la phase dudit signal optique numérique (1000) à l'aide d'une modulation comportant

      a) une fréquence de modulation déterminée en fonction de ladite cadence binaire $f_c$ dudit signal optique numérique (1000),
      b) une variation périodique dans le temps, qui est approximativement symétrique à un point prédéterminé à l'intérieur dudit créneau temporel et dont la durée est égale à $1/f_c$, et
      c) une amplitude maximale K de ladite variation période;

   ii. un élément de dispersion chromatique (204), connecté optiquement audit élément de modulation (2000) et apte à introduire un retard de groupe D dans chaque bit du signal optique numérique modulé en phase (1000), ledit élément de dispersion chromatique (204) fournissant une dispersion de type anormal lorsque ladite variation périodique dans le temps possède une amplitude de modulation positive, et une dispersion de type normal lorsque ladite variation périodique dans le temps possède une amplitude de modulation négative.

2. Système de communication optique (100) selon la revendication 1, **caractérisé en ce que** le produit de ladite amplitude maximale K et ledit retard de groupe D se situe dans la gamme de A à B, A étant égal à -0,5*(1-X) et B étant égal à -0,5*(1+Y) et X est inférieur ou égal à 0,2 et Y est inférieur ou égal à 2.

3. Système de communication optique (100) selon la revendication 1 ou 2, **caractérisé en ce que** lesdits bits sont présents dans le format RZ.

4. Système de communication optique (100) selon la revendication 1 ou 2, **caractérisé en ce que** lesdits bits sont présents selon le format NRZ.

5. Système de communication optique (100) selon la revendication 1 ou 4, **caractérisé en ce que** ledit second dispositif (20) comprend également un diviseur de faisceau optique (22) apte à diviser l'intensité dudit signal optique numérique (1000) de manière à délivrer une première fraction de l'intensité dudit dispositif de modulation et de dispersion (200) et une seconde fraction d'intensité pour un dispositif (23) de récupération du signal d'horloge.

6. Système de communication optique (100) selon la revendication 5, **caractérisé en ce que** ledit dispositif (23) de récupération du signal d'horloge est connecté activement audit élément de modulation (2000) dudit dispositif de modulation et de dispersion (200) et peut déterminer la cadence binaire $f_c$ dudit signal optique numérique (1000) arrivant audit diviseur de faisceau optique et la synchronisation avec la position centrale moyenne du créneau temporel des bits dudit signal optique numérique (1000).

7. Système de communication optique (100) selon l'une quelconque des revendications précédentes 1 à 6, **caractérisé en ce que** ladite variation périodique dans le temps de ladite modulation de phase est approximativement parabolique.

8. Système de communication optique (100) selon l'une quelconque des revendications précédentes 1 à 7, **caractérisé en ce que** ledit élément de modulation (2000) comprend au moins un modulateur de phase (202) et un dispositif de commande (24) pour ledit modulateur de phase (202), ledit dispositif de commande (24) étant connecté activement audit dispositif (23) de récupération du signal d'horloge.

**9.** Système de communication optique (100) selon l'une quelconque des revendications précédentes 1 à 8, **caractérisé en ce que** ledit élément de dispersion chromatique (200) comprend une section appropriée de fibre optique.

**10.** Dispositif de modulation et de dispersion (200) pour traiter un signal optique (1000),
**caractérisé en ce que** ledit dispositif de modulation et de dispersion comprend

- un élément de modulation (2000) pour moduler la phase dudit signal optique numérique (1000) à l'aide d'une modulation comportant

a) une fréquence de modulation déterminée,
b) une variation périodique prédéterminée dans le temps, et
c) une amplitude maximale K de ladite variation périodique;

- un élément de dispersion chromatique (204), connecté optiquement audit élément de modulation (2000) et apte à introduire un retard de groupe D dans ledit signal optique (1000),

i. le produit de ladite amplitude maximale K et ledit retard de groupe D se situant dans la gamme de A à B, A étant égal à -0,5*(1-X) et B étant égal à -0,5*(1+Y) et X étant inférieur ou égal à 0,2 et Y étant inférieur ou égal à 2;
ii. ledit élément de dispersion chromatique (204) produisant une dispersion du type anormal lorsque ladite variation périodique dans le temps possède une amplitude de modulation positive, et une dispersion de type normal lorsque ladite variation périodique dans le temps possède une amplitude de modulation négative.

**11.** Dispositif de modulation et de dispersion (200) selon la revendication 10, **caractérisé en ce que** ledit signal optique (1000) est un signal optique comprenant une suite de bits ayant une cadence binaire prédéterminée $f_c$ et un créneau temporel prédéterminé mesuré d'une durée égale à $1/f_c$.

**12.** Dispositif de modulation et de dispersion (200) selon la revendication 11, **caractérisé en que** ladite fréquence de modulation est choisie en fonction de ladite cadence binaire $f_c$.

**13.** Dispositif de modulation et de dispersion (200) selon la revendication 11 ou 12, **caractérisé en ce que** ladite variation périodique dans le temps est approximativement symétrique par rapport à un point prédéterminé dans ledit créneau temporel avec une durée égale à $1/f_c$.

**14.** Procédé pour le traitement des bits d'un signal optique numérique comprenant une suite de bit possédant une cadence binaire prédéterminée $f_c$ et un créneau temporel prédéterminé ayant une durée $1/f_c$, ledit procédé comprenant l'étape consistant à

a) moduler la phase dudit signal optique numérique,
**caractérisé en ce que** ladite modulation de phase possède

a1) une fréquence de modulation prédéterminée en fonction de ladite cadence binaire $f_c$ dudit signal optique numérique;
a2) une variation périodique dans le temps qui est approximativement symétrique par rapport à un point prédéterminé dans ledit créneau temporel possédant la durée $1/f_c$, et
a3) une amplitude maximale K de ladite variation périodique;

ledit procédé comprenant en outre l'étape consistant à
b) dans un élément de dispersion chromatique approprié, amener un retard de groupe D de chaque bit dudit signal optique numérique modulé en phase, ledit élément de dispersion chromatique fournissant une dispersion du type anormale lorsque ladite variation périodique dans le temps possède une amplitude de modulation positive, et une dispersion du type normal lorsque ladite variation périodique dans le temps possède une amplitude de modulation négative.

**15.** Procédé selon la revendication 14, **caractérisé en ce que** ledit traitement consiste en une compression des bits dudit signal optique numérique.

**16.** Procédé selon la revendication 14, **caractérisé en ce que** ledit traitement consiste en le recadencement des bits dudit signal optique numérique.

**17.** Procédé selon la revendication 14, **caractérisé en ce que** ledit traitement consiste en la compression et le recadencement des bits dudit signal optique numérique.

**18.** Procédé selon l'une quelconque des revendications précédentes 14 à 17, **caractérisé en ce que** le produit de ladite amplitude maximale K par ledit retard de groupe D se situe dans la gamme entre A et B, A étant égale à -0,5*(1-X) et B étant égal à -0,5*(1+Y) et X est inférieur ou égal à 0,2 et Y est inférieur ou égal à 2.

**19.** Système de communication optique (100) comprenant:

- un premier dispositif (10) pour transmettre au moins un signal optique numérique (1000) comprenant une suite de bits prédéterminée $f_c$ et un créneau temporel prédéterminé ayant une durée prédéterminée $1/f_c$;
- une ligne de transmission optique (30) connectée optiquement audit premier dispositif (10) pour la propagation dudit signal optique numérique (1000);
- un second dispositif (20) connecté optiquement à ladite ligne de transmission optique (30) pour recevoir ledit signal optique numérique (1000), ledit second dispositif (20) comprenant un dispositif de réception (40) et un dispositif de modulation et de dispersion (200), **caractérisé en ce que** ledit dispositif de modulation et de dispersion (200) comprend:

  i. un élément de modulation (2400) servant à moduler l'amplitude dudit signal optique numérique (1000) au moyen d'une modulation possédant

  a1) une fréquence de modulation déterminée en fonction de ladite cadence binaire $f_c$ dudit signal optique numérique (1000),
  b1) une variation d'amplitude dans le temps, qui est approximativement symétrique par rapport à un point prédéterminé à l'intérieur dudit créneau temporel, dont la durée est égale à $1/f_c$, et
  c1) une amplitude maximale $\alpha_{AM}$ de ladite variation périodique d'amplitude;

  ii. un élément de modulation (2000) pour moduler la phase dudit signal optique numérique (1000) par une modulation possédant

  a2) une fréquence de modulation prédéterminée en fonction de ladite cadence binaire $f_c$ dudit signal optique numérique (1000),
  b2) une variation périodique de phase dans le temps qui est approximativement symétrique par rapport à un point prédéterminé dans ledit créneau temporel, dont la durée est $1/f_c$, et
  c2) une amplitude maximale K de ladite variation période de phase;

  iii. un élément de dispersion chromatique (204), connecté optiquement auxdits éléments de modulation (2000, 2400) et apte à introduire un retard de groupe D dans chaque bit du signal optique numérique modulé (1000), ledit élément de dispersion chromatique (204) fournissant une dispersion de type anormal lorsque ladite variation périodique de phase dans le temps possède une amplitude de modulation positive, et une dispersion de type normal lorsque ladite variation périodique de phase dans le temps possède une amplitude de modulation négative.

- lesdits éléments de modulation d'amplitude (2400, 2000) étant connectés optiquement en cascade.

**20.** Système de communication optique (100) selon la revendication 19, **caractérisé en ce que** le produit de ladite amplitude maximale K par ledit retard de groupe D se situe dans la gamme allant de A à B A étant égal à -0,5*(1-X) et B étant égal à -0,5*(1+Y) et X est inférieur ou égal à 0,2 et Y est inférieur ou égal à 2.

**21.** Système de communication optique (100) selon la revendication 19 ou 20, **caractérisé en ce que** lesdits bits sont présents selon le format RZ.

**22.** Système de communication optique (100) selon la revendication 19 ou 20, **caractérisé en ce que** lesdits bits sont présents selon le format NRZ.

**23.** Dispositif de modulation et de dispersion (200) pour traiter un signal optique (1000), **caractérisé en ce que** ledit dispositif de modulation et de dispersion comprend

- un élément de modulation (2400) servant à moduler l'amplitude dudit signal optique (1000) par une modulation possédant

  a) une fréquence de modulation prédéterminée,
  b) une variation périodique prédéterminée d'amplitude dans le temps, et
  c) une amplitude maximale $\alpha_{AM}$ de ladite variation périodique d'amplitude;

- un élément de modulation (2000) pour moduler la phase dudit signal optique numérique (1000) par une modulation possédant

a) ladite modulation de fréquence prédéterminée,
b) une variation périodique prédéterminée de phase dans le temps, et
c) une amplitude maximale K de ladite variation périodique de phase;

- un élément de dispersion chromatique (204), connecté optiquement auxdits éléments de modulation (2000; 2400) et apte à introduire un retard de groupe D dans ledit signal optique numérique modulé (1000),

i) le produit de ladite amplitude maximale K par ledit retard de groupe D se situant dans la gamme de A à B, A étant égal à -0,5*(1-X) et B étant égal à -0,5*(1+Y) et X étant inférieur ou égal à 0,2 et Y étant inférieur ou égal à 2;
ii) ledit élément de dispersion chromatique (204) réalisant une dispersion du type anormal lorsque ladite variation périodique de phase dans le temps possède une amplitude de modulation positive, et une dispersion du type normal lorsque ladite variation périodique de phase dans le temps possède une amplitude de modulation négative,

- lesdits éléments de modulation d'amplitude et de phase (2400, 2000) étant connectés optiquement en cascade.

**24.** Procédé pour traiter des bits d'un signal optique numérique comprenant une suite de bits possédant une cadence binaire prédéterminée $f_c$ et un créneau temporel prédéterminé ayant une durée égale à $1/f_c$, **caractérisé en ce que** ledit procédé comprend les étapes consistant à

a) moduler la phase dudit signal optique numérique, par une modulation possédant

a1) une fréquence de modulation déterminée en fonction de ladite cadence binaire $f_c$ dudit signal optique numérique,
a2) une variation périodique dans le temps qui est approximativement symétrique par rapport à un point prédéterminé dans ledit créneau temporel possédant la durée $1/f_c$, et
a3) une amplitude maximale $a_M$ de ladite variation périodique;

b) moduler la phase dudit signal optique numérique par une modulation possédant

b1) une fréquence de modulation prédéterminée en fonction de ladite cadence binaire $f_c$ dudit signal optique numérique,
b2) une variation période de phase dans le temps, qui est approximativement symétrique par rapport à un point prédéterminé situé dans ledit créneau temporel possédant la durée égale à $1/f_c$, et
b3) une amplitude maximale K de ladite variation périodique;

c) produire, dans un élément de dispersion chromatique approprié, un retard de groupe D de chaque bit dudit signal optique numérique modulé, ledit élément de dispersion chromatique fournissant une dispersion du type anormale lorsque ladite variation périodique de phase dans le temps possède une amplitude de modulation positive, et une dispersion du type normal lorsque ladite variation périodique dans le temps possède une amplitude de modulation négative,

- ladite modulation d'amplitude et ladite modulation de phase étant exécutées en série.

EP 1 171 968 B1

a)

b)

FIG.1

FIG. 2

FIG. 3

FIG. 4

FIG. 5a

FIG. 5b

FIG. 5c

FIG. 6a

FIG. 6b

FIG. 6c

FIG. 7

FIG. 8

FIG. 9

FIG. 10

FIG. 11

FIG. 12

FIG. 13

FIG. 14

FIG. 15

FIG. 16

a)                    b)

FIG. 17

FIG. 18

FIG. 19

FIG. 20a

FIG. 20b

FIG. 21

EP 1 171 968 B1

FIG. 22

FIG. 23